(19) Europäisches Patentamt
European Patent Office
Office européen des brevets

(11) **EP 4 621 447 A1**

(12) **EUROPEAN PATENT APPLICATION**

(43) Date of publication:
24.09.2025 Bulletin 2025/39

(21) Application number: 25163902.7

(22) Date of filing: 14.03.2025

(51) International Patent Classification (IPC):
*G01V 1/28* $^{(2006.01)}$

(52) Cooperative Patent Classification (CPC):
**G01V 1/282;** G01V 2210/614; G01V 2210/6222;
G01V 2210/679

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 14.03.2024 US 202463565243 P

(71) Applicants:
• **Services Pétroliers Schlumberger
75007 Paris (FR)**
Designated Contracting States:
**FR**
• **GeoQuest Systems B.V.
2514 JG The Hague (NL)**
Designated Contracting States:
**AL AT BE BG CH CY CZ DE DK EE ES FI GB GR
HR HU IE IS IT LI LT LU LV MC ME MK MT NL NO
PL PT RO RS SE SI SK SM TR**

(72) Inventors:
• **XU, Zhen
Houston, TX 77077 (US)**
• **HALLIDAY, David Fraser
Crawley, RH10 9BU (GB)**
• **ANDREASI, Federico Golfre'
20097 Milan (IT)**
• **ZHAO, Xikai
Vancouver, V5Y 3G6 (CA)**
• **RICKETT, James
Crawley, CB3 0EL (GB)**

(74) Representative: **Schlumberger Intellectual
Property Department
Parkstraat 83
2514 JG Den Haag (NL)**

(54) **SEISMIC IMAGING FRAMEWORK**

(57) A method can include performing a simulation to generate synthetic seismic data using a wavelet and a velocity model of a subsurface geologic region, where the velocity model includes representations of subsurface structural features and associated geophysical parameters; generating a velocity gradient conditioner for the velocity model based at least in part on the synthetic seismic data; performing an iterative inversion process using acquired seismic data for the subsurface geologic region, the velocity model, and the velocity gradient conditioner; and outputting a final velocity model of the subsurface geologic region as a result of the iterative inversion process.

**EP 4 621 447 A1**

Method 600

```
┌─────────────────────────────────────┐
│   Provide Initial Model & Selected   │
│              Wavelet                 │
│                610                   │
└─────────────────────────────────────┘
                    │
                    ▼
┌─────────────────────────────────────┐
│        Generate Synthetic Data       │ ◄──────┐
│                620                   │        │
└─────────────────────────────────────┘        │
                    │                           │
                    ▼                           │
┌─────────────────────────────────────┐        │
│   Compare Field Data to Synthetic    │        │
│               Data                   │        │
│                630                   │        │
└─────────────────────────────────────┘   ┌──────────────┐
                    │                      │ Iterate Until │
                    ▼                      │ Convergence   │
┌─────────────────────────────────────┐   │ Criterion Met │
│          Compute Gradient            │   │     670       │
│                640                   │   └──────────────┘
└─────────────────────────────────────┘        │
                    │                           │
                    ▼                           │
┌─────────────────────────────────────┐        │
│        Perform Line Search           │        │
│                650                   │        │
└─────────────────────────────────────┘        │
                    │                           │
                    ▼                           │
┌─────────────────────────────────────┐        │
│           Update Model               │        │
│                660                   │────────┘
└─────────────────────────────────────┘
```

# Fig. 6

**Description**

RELATED APPLICATION

This application claims priority to and the benefit of a U.S. Provisional Application having Serial No. 63/565,243, filed 14 March 2024, which is incorporated by reference herein in its entirety.

BACKGROUND

Reflection seismology finds use in geophysics to estimate properties of subsurface formations. Reflection seismology may provide seismic data representing waves of elastic energy as transmitted by P-waves and S-waves, in a frequency range of approximately 1 Hz to approximately 100 Hz. In various instances, seismic data can also represent refractions and/or diving waves. Seismic data may be processed and interpreted to understand better composition, fluid content, extent and geometry of subsurface rocks. For example, a full-waveform inversion (FWI) may be implemented as part of a seismic data workflow for building a model of a subsurface environment where information from reflections, refractions and/or diving waves may be considered.

SUMMARY

A method can include performing a simulation to generate synthetic seismic data using a wavelet and a velocity model of a subsurface geologic region, where the velocity model includes representations of subsurface structural features and associated geophysical parameters; generating a velocity gradient conditioner for the velocity model based at least in part on the synthetic seismic data; performing an iterative inversion process using acquired seismic data for the subsurface geologic region, the velocity model, and the velocity gradient conditioner; and outputting a final velocity model of the subsurface geologic region as a result of the iterative inversion process. A system can include a processor; memory operatively coupled to the processor; and processor-executable instructions stored in the memory to instruct the system to: perform a simulation to generate synthetic seismic data using a wavelet and an earth model of a subsurface geologic region, where the earth model includes representations of subsurface structural features and associated geophysical parameters; generate an earth model gradient conditioner for the earth model based at least in part on the synthetic seismic data; perform an iterative inversion process using acquired seismic data for the subsurface geologic region, the earth model, and the earth model gradient conditioner; and output a final earth model of the subsurface geologic region as a result of the iterative inversion process. One or more computer-readable storage media can include computer-executable instructions executable to instruct a computing system to: perform a simulation to generate synthetic seismic data using a wavelet and an earth model of a subsurface geologic region, where the earth model includes representations of subsurface structural features and associated geophysical parameters; generate an earth model gradient conditioner for the earth model based at least in part on the synthetic seismic data; perform an iterative inversion process using acquired seismic data for the subsurface geologic region, the earth model, and the earth model gradient conditioner; and output a final earth model of the subsurface geologic region as a result of the iterative inversion process. Various other examples of methods, systems, devices, etc., are also disclosed.

This summary is provided to introduce a selection of concepts that are further described below in the detailed description. This summary is not intended to identify key or essential features of the claimed subject matter, nor is it intended to be used as an aid in limiting the scope of the claimed subject matter.

BRIEF DESCRIPTION OF THE DRAWINGS

Features and advantages of the described implementations can be more readily understood by reference to the following description taken in conjunction with the accompanying drawings.

Fig. 1 illustrates an example of a geologic environment;
Fig. 2 illustrates examples of survey techniques;
Fig. 3 illustrates examples of survey techniques;
Fig. 4 illustrates examples of survey techniques;
Fig. 5 illustrates an example of forward modeling and an example of inversion;
Fig. 6 illustrates an example of a method;
Fig. 7 illustrates an example of a workflow;
Fig. 8 illustrates an example of a graphic;
Fig. 9 illustrates examples of graphics;
Fig. 10 illustrates an example of a method and an example of a system;

Fig. 11 illustrates an example of a computational framework; and

Fig. 12 illustrates components of a system and a networked system.

DETAILED DESCRIPTION

The following description includes the best mode presently contemplated for practicing the described implementations. This description is not to be taken in a limiting sense, but rather is made merely for the purpose of describing the general principles of the implementations. The scope of the described implementations should be ascertained with reference to the issued claims.

As mentioned, reflection seismology finds use in geophysics to estimate properties of subsurface formations. Reflection seismology can provide seismic data representing waves of elastic energy, as transmitted by P-waves and S-waves, in a frequency range of approximately 1 Hz to approximately 100 Hz or optionally less than 1 Hz and/or optionally more than 100 Hz. Seismic data may be processed and interpreted to understand better composition, fluid content, extent and geometry of subsurface rocks.

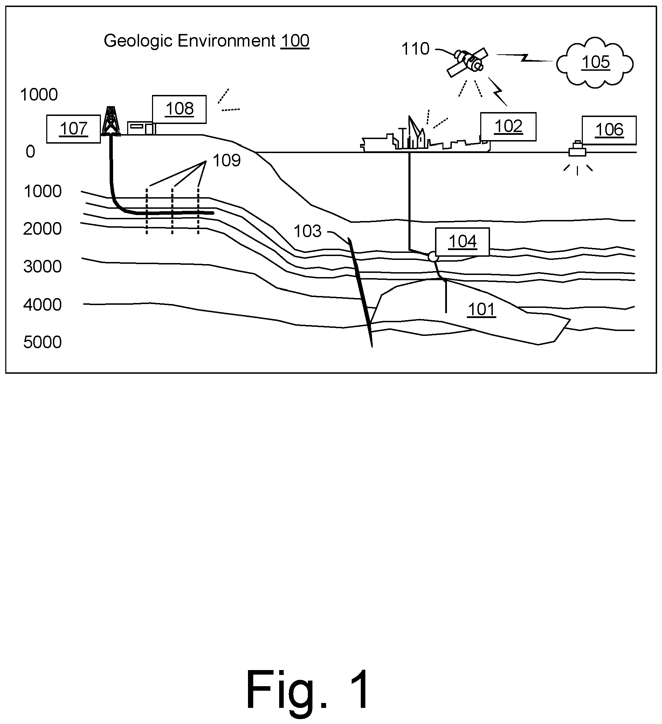

Fig. 1 shows a geologic environment 100 (an environment that includes a sedimentary basin, a reservoir 101, a fault 103, one or more fractures 109, etc.) and an example of an acquisition technique 140 to acquire seismic data (see data 160). A system may process data acquired by the technique 140 to allow for direct or indirect management of sensing, drilling, injecting, extracting, etc., with respect to the geologic environment 100. In turn, further information about the geologic environment 100 may become available as feedback (optionally as input to the system). An operation may pertain to a reservoir that exists in the geologic environment 100 such as the reservoir 101. A technique may provide information (as an output) that specifies one or more location coordinates of a feature in a geologic environment, one or more characteristics of a feature in a geologic environment, etc.

The geologic environment 100 may be referred to as a formation or may be described as including one or more formations. A formation may be a unit of lithostratigraphy such as a body of rock that is sufficiently distinctive and continuous.

A system may be implemented to process seismic data, optionally in combination with other data. Processing of data may include generating one or more seismic attributes, rendering information to a display or displays, etc. A process or workflow may include interpretation, which may be performed by an operator that examines renderings of information (to one or more displays, etc.) and that identifies structure or other features within such renderings. Interpretation may be or include analyses of data with a goal to generate one or more models and/or predictions (about properties and/or structures of a subsurface region).

A system may include features of a framework such as the PETREL seismic to simulation software framework (SLB, Houston, Texas). Such a framework can receive seismic data and other data and allow for interpreting data to determine structures that can be utilized in building a simulation model.

A system may include add-ons or plug-ins that operate according to specifications of a framework environment. As an example, a framework may be implemented within or in a manner operatively coupled to the DELFI cognitive exploration and production (E&P) environment (SLB, Houston, Texas), which is a secure, cognitive, cloud-based collaborative environment that integrates data and workflows with digital technologies, such as artificial intelligence and machine learning. As an example, such an environment can provide for operations that involve one or more frameworks.

Seismic data may be processed using a framework such as the OMEGA framework (SLB, Houston, TX). The OMEGA framework provides features that can be implemented for processing of seismic data through prestack seismic interpretation and seismic inversion.

A framework for processing data may include features for 2D line and 3D seismic surveys. Modules for processing seismic data may include features for prestack seismic interpretation (PSI), optionally pluggable into a framework such as the DELFI framework environment.

In Fig. 1, the geologic environment 100 includes an offshore portion and an on-shore portion. A geologic environment may be or include one or more of an offshore geologic environment, a seabed geologic environment, an ocean bed geologic environment, etc.

The geologic environment 100 may be outfitted with one or more of a variety of sensors, detectors, actuators, etc. Equipment 102 may include communication circuitry that receives and that transmits information with respect to one or more networks 105. Such information may include information associated with downhole equipment 104, which may be equipment to acquire information, to assist with resource recovery, etc. Other equipment 106 may be located remote from a well site and include sensing, detecting, emitting or other circuitry and/or be located on a seabed. Such equipment may include storage and communication circuitry that stores and that communicates data, instructions, etc. One or more satellites may be provided for purposes of communications, data acquisition, etc. Fig. 1 shows a satellite 110 in communication with the network 105 that may be configured for communications, noting that the satellite 110 may additionally or alternatively include circuitry for imagery (spatial, spectral, temporal, radiometric, etc.).

Fig. 1 also shows the geologic environment 100 as optionally including equipment 107 and 108 associated with a well that includes a substantially horizontal portion that may intersect with one or more of the one or more fractures 109; consider a well in a shale formation that may include natural fractures, artificial fractures (hydraulic fractures) or a combination of natural and artificial fractures. The equipment 107 and/or 108 may include components, a system, systems, etc. for fracturing, seismic sensing, analysis of seismic data, assessment of one or more fractures, etc.

A system may be used to perform one or more workflows. A workflow may be a process that includes a number of worksteps. A workstep may operate on data to create new data, to update existing data, etc. A system may operate on one or more inputs and create one or more results based on one or more algorithms. A workflow may be a workflow implementable in the PETREL software that operates on seismic data, seismic attribute(s), etc. A workflow may be a process implementable in the DELFI environment, etc. A workflow may include one or more worksteps that access a plug-in (external executable code, etc.). A workflow may include rendering information to a display (a display device). A workflow may include receiving instructions to interact with rendered information to process information and optionally render processed information. A workflow may include transmitting information that may control, adjust, initiate, etc. one or more operations of equipment associated with a geologic environment (in the environment, above the environment, etc.).

As an example, an acquisition technique can be utilized to perform a seismic survey. A seismic survey can acquire various types of information, which can include various types of waves (e.g., P, SV, SH, etc.). A P-wave can be an elastic body wave or sound wave in which particles oscillate in the direction the wave propagates. P-waves incident on an interface (at other than normal incidence, etc.) may produce reflected and transmitted S-waves (e.g., "converted" waves). An S-wave or shear wave may be an elastic body wave in which particles oscillate perpendicular to the direction in which the wave propagates. S-waves may be generated by a seismic energy source (e.g., other than an air gun). S-waves may be converted to P-waves. S-waves tend to travel more slowly than P-waves and do not travel through fluids that do not support shear. Recording of S-waves involves use of one or more receivers operatively coupled to earth (e.g., capable of receiving shear forces with respect to time). Interpretation of S-waves may allow for determination of rock properties such as fracture density and orientation, Poisson's ratio and rock type by crossplotting P-wave and S-wave velocities, and/or by other techniques. Parameters that may characterize anisotropy of media (e.g., seismic anisotropy) include the Thomsen parameters $\varepsilon$, $\delta$ and $\gamma$.

Seismic data may be acquired for a region in the form of traces. For example, a technique can utilize a source for emitting energy where portions of such energy (e.g., directly and/or reflected) may be received via one or more sensors (e.g., receivers). Energy received may be discretized by an analog-to-digital converter that operates at a sampling rate. Acquisition equipment may convert energy signals sensed by a sensor to digital samples at a rate of one sample per approximately 4 ms. Given a speed of sound in a medium or media, a sample rate may be converted to an approximate distance. The speed of sound in rock may be of the order of around 5 km per second. Thus, a sample time spacing of approximately 4 ms would correspond to a sample "depth" spacing of about 10 meters (e.g., assuming a path length from source to boundary and boundary to sensor). A trace may be about 4 seconds in duration; thus, for a sampling rate of one sample at about 4 ms intervals, such a trace would include about 1000 samples where latter acquired samples correspond to deeper reflection boundaries. If the 4 second trace duration of the foregoing scenario is divided by two (e.g., to account for reflection), for a vertically aligned source and sensor, the deepest boundary depth may be estimated to be about 10 km (e.g., assuming a speed of sound of about 5 km per second).

As mentioned, seismic data may be acquired and analyzed to understand better subsurface structure of a geologic environment. Reflection seismology finds use in geophysics, for example, to estimate properties of subsurface formations. As an example, reflection seismology may provide seismic data representing waves of elastic energy (e.g., as transmitted by P-waves and S-waves, in a frequency range of approximately 1 Hz to approximately 100 Hz or optionally less than 1 Hz and/or optionally more than 100 Hz). Seismic data may be processed and interpreted, for example, to understand better composition, fluid content, extent and geometry of subsurface rocks.

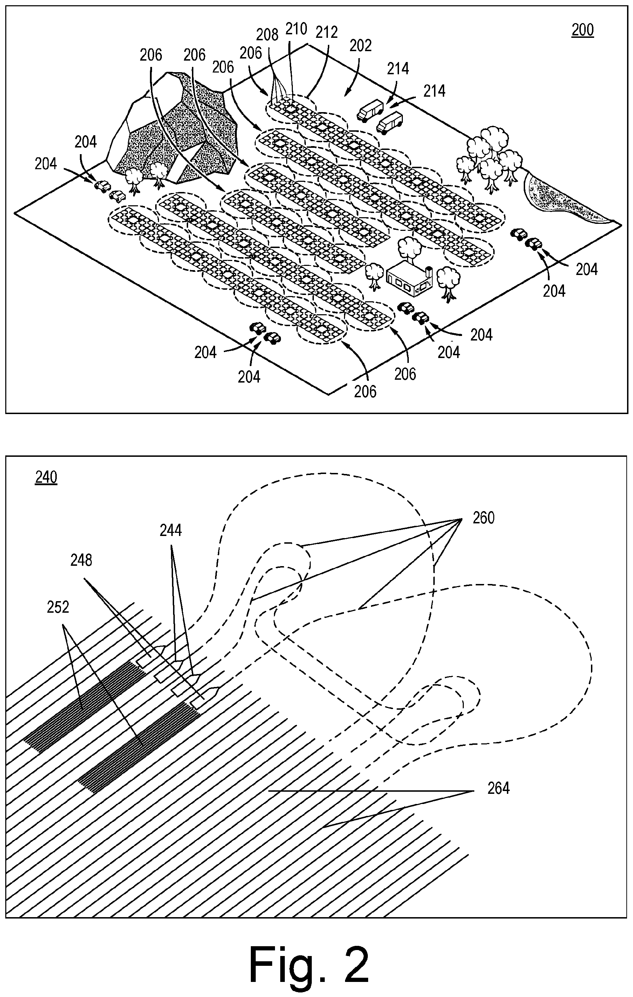

Fig. 2 shows an example of a simplified schematic view of a land seismic data acquisition system 200 and an example of a simplified schematic view of a marine seismic data acquisition system 240.

As shown with respect to the system 200, an area 202 to be surveyed may or may not have physical impediments to direct wireless communication between a recording station 214 (e.g., which may be a recording truck) and a vibrator 204. A plurality of vibrators 204 may be employed, as well as a plurality of sensor unit grids 206, each of which may have a plurality of sensor units 208.

As illustrated in Fig. 2 with respect to the system 200, approximately 24 to about 28 sensor units 208 may be placed in a vicinity (e.g., a region) around a base station 210. The number of sensor units 208 associated with each base station 210 may vary from survey to survey. Circles 212 indicate an approximate range of reception for each base station 210.

In the system 200 of Fig. 2, the plurality of sensor units 208 may be employed in acquiring and/or monitoring land-seismic sensor data for the area 202 and transmitting the data to the one or more base stations 210. Communications between the vibrators 204, the base stations 210, the recording station 214, and the seismic sensors 208 may be wireless (e.g., at least in part via air for a land-based system; or optionally at least in part via water for a sea-based system).

In the system 240 of Fig. 2, one or more source vessels 240 may be utilized with one or more streamer vessels 248 or a vessel or vessels may tow both a source or sources and a streamer or streamers 252. In the example of Fig. 2, the vessels 244 and 248 (e.g., or just the vessels 248 if they include sources) may follow predefined routes (e.g., paths) for an acquisition geometry that includes inline and crossline dimensions. As shown, routes 260 can be for maneuvering the vessels to positions 264 as part of the survey. As an example, a marine seismic survey may call for acquiring seismic data during a turn (e.g., during one or more of the routes 260).

The example systems 200 and 240 of Fig. 2 demonstrate how surveys may be performed according to an acquisition geometry that includes dimensions such as inline and crossline dimensions, which may be defined as x and y dimensions in a plane or surface where another dimension, z, is a depth dimension. As explained, time can be a proxy for depth, depending on various factors, which can include knowing how many reflections may have occurred as a single reflection may mean that depth of a reflector can be approximated using one-half of a two-way traveltime, some indication of the speed of sound in the medium and positions of the receiver and source (e.g., corresponding to the two-way traveltime).

Two-way traveltime (TWT) can be defined as the elapsed time for a seismic wave to travel from its source to a given reflector and return to a receiver (e.g., at a surface, etc.). As an example, a minimum two-way traveltime (TWT) can be defined to be that of a normal-incidence wave with zero offset.

As an example, a seismic survey can include points referred to as common midpoints (CMPs). In multichannel seismic acquisition, a CMP is a point that is halfway between a source and a receiver that is shared by a plurality of source-receiver pairs. In such a survey, various angles may be utilized that may define offsets (e.g., offsets from a CMP, etc.). In a CMP approach, redundancy among source-receiver pairs can enhance quality of seismic data, for example, via stacking of the seismic data. A CMP can be vertically above a common depth point (CDP), or common reflection point (CRP). As an example, seismic data may be presented as a gather, which can be an image of seismic traces that share an acquisition parameter, such as a common midpoint gather (CMP gather or CMG), which contains traces having a common midpoint (CMP). In such an example, a CMG may be presented with respect to a horizontal dimension and a time dimension, which may be a TWT dimension.

As an example, a seismic survey can include points referred to as downward reflection points (DRPs). A DRP is a point where seismic energy is reflected downwardly. For example, where multiple interfaces exist, seismic energy can reflect upwardly from one interface, reach a shallower interface and then reflect downwardly from the shallower interface. A path that includes a downward reflection may be a multiple path (e.g., a multiple) in that energy along the path is reflected from multiple surfaces (e.g., upwardly and downwardly). In contrast, a path that includes a single upward reflection may be referred to as a primary path (e.g., a primary) in that energy along the path is reflected from a single surface (e.g., upwardly only).

As an example, a seismic survey may be an amplitude variation with offset (AVO) survey. Such a survey can record variation in seismic reflection amplitude with change in distance between position of a source and position of a receiver, which may indicate differences in lithology and fluid content in rocks above and below a reflector.

AVO analysis can allow for determination of one or more characteristics of a subterranean environment (e.g., thickness, porosity, density, velocity, lithology and fluid content of rocks, etc.). As an example, gas-filled sandstone might show increasing amplitude with offset; whereas, a coal might show decreasing amplitude with offset. AVO analysis can be suitable for young, poorly consolidated rocks, such as those in the Gulf of Mexico.

As an example, a method may be applied to seismic data to understand better how structural dip may vary with respect to offset and/or angle as may be associated with emitter-detector (e.g., source-receiver) arrangements of a survey, for example, to estimate how suitable individual offset/angle gathers are for AVO imaging. As explained, a gather may be a collection of seismic traces that share an acquisition parameter, such as a common midpoint (CMP), with other collections of seismic traces. For example, consider an AVO survey that includes a plurality of emitter-detector arrangements (e.g., source-receiver pairs) with corresponding angles defined with respect to a common midpoint (CMP). Given a CMP, acquired survey data may be considered to cover a common subsurface region (e.g., a region that includes the midpoint).

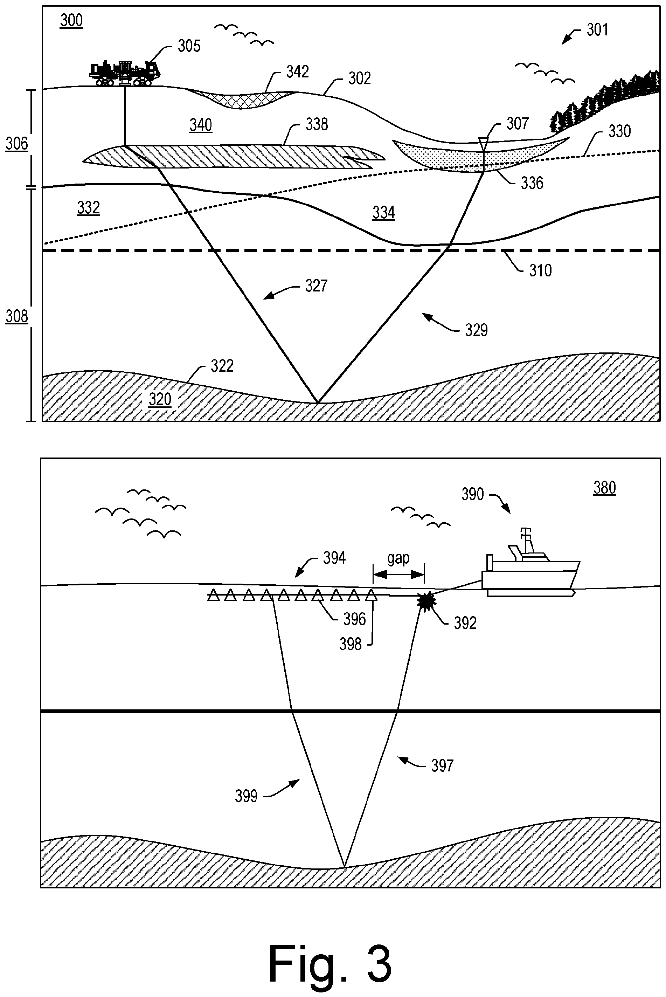

Fig. 3 shows an example of a land system 300 and an example of a marine system 380. The land system 300 is shown in a geologic environment 301 that includes a surface 302, a source 305 at the surface 302, a near-surface zone 306, a receiver 307, a bedrock zone 308 and a datum 310 where the near-surface zone 306 (e.g., near-surface region) may be defined at least in part by the datum 310, which may be a depth or layer or surface at which data above are handled differently than data below. For example, a method can include processing seismic data that aims to "place" the source 305 and the receiver 307 on a datum plane defined by the datum 310 by adjusting (e.g., "correcting") traveltimes for propagation through the near-surface region (e.g., a shallower subsurface region).

In the example system 300 of Fig. 3, the geologic environment 301 can include various features such as, for example, a layer 320 that defines an interface 322 that can be a reflector, a water table 330, a leached zone 332, a glacial scour 334, a buried river channel 336, a region of material 338 (e.g., ice, evaporates, volcanics, etc.), a high velocity zone 340, and a region of material 342 (e.g., Eolian or peat deposits, etc.).

In Fig. 3, the land system 300 is shown with respect to downgoing rays 327 (e.g., downgoing seismic energy) and upgoing rays 329 (e.g., upgoing seismic energy). As illustrated the rays 327 and 329 pass through various types of materials and/or reflect off of various types of materials.

Various types of seismic surveys can contend with surface unevenness and/or near-surface heterogeneity. For example, a shallow subsurface can include large and abrupt vertical and horizontal variations that may be, for example, caused by differences in lithology, compaction cementation, weather, etc. Such variations can generate delays or advances in arrival times of seismic waves passing through them relative to waves that do not. By accounting for such time differences, a seismic image may be of enhanced resolution with a reduction in false structural anomalies at depth, a reduction in mis-ties between intersecting lines, a reduction in artificial events created from noise, etc.

As an example, a method can include adjusting for such time differences by applying a static, or constant, time shift to a seismic trace where, for example, applying a static aims to place a source and receiver at a constant datum plane below a near-surface zone. As an example, an amount by which a trace is adjusted can depend on one or more factors (e.g., thickness, velocity of near-surface anomalies, etc.).

In Fig. 3, the datum 310 is shown, for example, as a plane, below which strata may be of particular interest in a seismic imaging workflow. In a three-dimensional model of a geologic environment, a near surface region may be defined, for example, at least in part with respect to a datum. As an example, a velocity model may be a multidimensional model that models at least a portion of a geologic environment. As an example, an earth model may be or include a velocity model (e.g., one or more parameters as to one or more physical characteristics that may have an effect on seismic velocity).

In the example of Fig. 3, the source 305 can be a seismic energy source such as a vibrator. As an example, a vibrator may be a mechanical source that delivers vibratory seismic energy to the Earth for acquisition of seismic data. As an example, a vibrator may be mounted on a vehicle (e.g., a truck, etc.). As an example, a seismic source or seismic energy source may be one or more types of devices that can generate seismic energy (e.g., an air gun, an explosive charge, a vibrator, etc.).

Vibratory seismic data can be seismic data whose energy source is a vibrator that may use a vibrating plate to generate waves of seismic energy. As an example, the frequency and the duration of emitted energy can be controllable, for example, frequency and/or duration may be varied according to one or more factors (e.g., terrain, type of seismic data desired, etc.).

As an example, a vibrator may emit a linear sweep of a duration that is of the order of seconds (e.g., at least seven seconds, etc.), for example, beginning with high frequencies and decreasing with time (downsweeping) or going from low to high frequency (upsweeping). As an example, frequency may be changed (e.g., varied) in a nonlinear manner (e.g., certain frequencies are emitted longer than others, etc.). In various vibrator scenarios, resulting source wavelet can be one that is not impulsive. As an example, parameters of a vibrator sweep can include start frequency, stop frequency, sweep rate and sweep length.

As an example, a vibrator may be employed in land acquisition surveys for areas where explosive sources may be contraindicated (e.g., via regulations, etc.). As an example, more than one vibrator can be used simultaneously (e.g., in an effort to improve data quality, etc.).

As an example, a receiver may be a may be a UNIQ sensor unit (SLB, Houston, Texas). As an example, a sensor unit can include a geophone, which may be configured to detect motion in a single direction. As an example, a geophone may be configured to detect motion in a vertical direction. As an example, three mutually orthogonal geophones may be used in combination to collect so-called 3C seismic data. As an example, a sensor unit that can acquire 3C seismic data may allow for determination of type of wave and its direction of propagation. As an example, a sensor assembly or sensor unit may include circuitry that can output samples at intervals of 1 ms, 2 ms, 4 ms, etc. As an example, an assembly or sensor unit can include an analog to digital converter (ADC) such as, for example, a 24-bit sigma-delta ADC (e.g., as part of a geophone or operatively coupled to one or more geophones). As an example, a sensor assembly or sensor unit can include synchronization circuitry such as, for example, GPS synchronization circuitry with an accuracy of about plus or minus 12.5 microseconds. As an example, an assembly or sensor unit can include circuitry for sensing of real-time and optionally continuous tilt, temperature, humidity, leakage, etc. As an example, an assembly or sensor unit can include calibration circuitry, which may be self-calibration circuitry.

In Fig. 3, the system 380 includes equipment 390, which can be a vessel that tows one or more sources 392 and one or more streamers 394 (e.g., with receivers 396). In the system 380, the source 392 of the equipment 390 can emit energy at a location and a receiver 396 of the equipment 390 can receive energy at a location. The emitted energy can be at least in part along a path of the downgoing energy 397 (e.g., a downgoing ray) and the received energy can be at least in part along a path of the upgoing energy 399 (e.g., an upgoing ray).

In various systems, for one or more reasons, a gap in coverage may exist. For example, in the system 380 a gap is identified and labeled where the gap may be defined as a distance between the source 392 and a closest receiver 398. In such an example, the distance may be considered a practical or a safe distance for locating a seismic receiver from a seismic source. If a seismic receiver is too close to a seismic source, the seismic receiver may experience a rather large shock wave and/or may otherwise experience energy that may be quite high and raise concerns with calibration, dynamic range, etc.

In the examples of Fig. 3, the paths are illustrated as single reflection paths for sake of simplicity. In the environments illustrated, additional interactions, reflections can be expected. For example, ghosts may be present. A ghost can be defined as a short-path multiple, or a spurious reflection that occurs when seismic energy initially reverberates upward from a shallow subsurface and then is reflected downward, such as at the base of weathering or between sources and receivers and the sea surface. As an example, the equipment 390 can include a streamer that is configured to position receivers a distance below an air-water interface such that ghosts can be generated where upgoing energy impacts the air-water interface and then reflects downward to the receivers. In such an example, a process may be applied that aims to "deghost" seismic data. Deghosting can be applied to marine seismic survey data where such a process aims to attenuate signals that are downgoing from an air-water interface (e.g., a sea surface interface). As mentioned, one or more other techniques, technologies, etc., may be utilized for seismic surveying (e.g., ocean bottom cables, ocean bottom nodes, etc.).

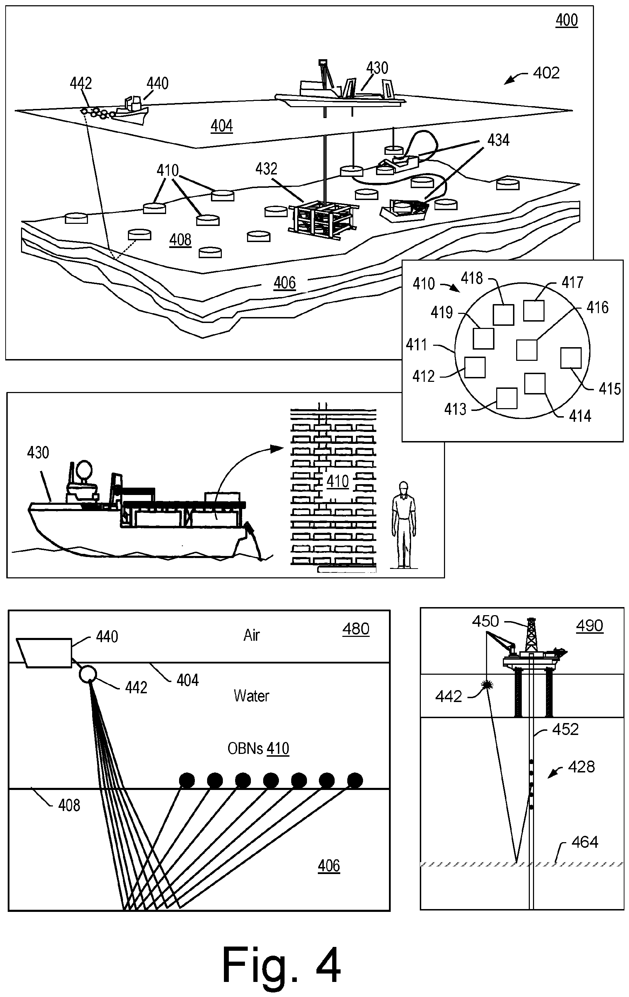

Fig. 4 shows a system 400 for acquisition of information in a geologic environment 402 that includes an air-water surface 404, a formation 406 and a seabed 408 (e.g., water-bed interface) where nodes 410 are positioned on the seabed 408. Equipment may be utilized to position the nodes 410 on the seabed 404 and retrieve the nodes 410 from the seabed 404. Such equipment may include one or more vessels 430, one or more carriers 432 and one or more vehicles 434, which may be autonomous, semi-autonomous, etc. (e.g., remotely operated vehicles (ROVs), etc.). The system 400 may include a seismic source vessel 440 that includes one or more seismic sources 442. The seismic source vessel 440 may travel a path while, at times, emitting seismic energy from the one or more sources 442. In such an approach, the nodes 410 can receive portions of the seismic energy, which can include portions that have travelled through the formation 406. Analysis of received seismic energy by the nodes 410 may reveal features of the formation 406.

In Fig. 4, the vessel 430 is shown as including nodes 410 as cargo arranged on racks. The nodes 410 can be deployed to form an array, for example, according to a survey plan. An array of nodes may be cabled or un-cabled. A cable may be relatively light weight and utilized to deploy a node receiver line with nodes coupled to the cable at spaced intervals. A rack can be utilized to securely store nodes in slots along multiple rows and columns. An individual slot may include a communications portal that can establish communication via contact(s) and/or contactless/wireless with an individual node seated in the individual slot for download of information, etc. A rack can include charger circuitry that can charge one or more batteries of an individual node seated in an individual slot. A node can be sealed such that components (e.g., circuitry, one or more batteries, etc.) are not exposed to water when the node is deployed on an underwater bed. A seal may be a hermetic seal that aims to prevent passage of air and/or water. A seal or seals can aim to prevent intrusion of water from an exterior region to an interior region of a node. Such a node can be considered to be water-tight. A sealed node can be a self-contained piece of equipment that can sense information independent of other equipment when positioned on an underwater surface that may be a seabed.

A rack may be dimensioned in accordance with shipping container dimensions such as about 3 meters by about 7 meters by about 3 meters. As shown in Fig. 4, with reference to a silhouette of a person that is about 1.8 meters in height, a node may be about a meter or less in diameter and about half a meter in height or less.

In Fig. 4, the one or more sources 442 may be an air gun or air gun array (e.g., a source array). A source can produce a pressure signal that propagates through water into a formation where acoustic and elastic waves are formed through interaction with features (e.g., structures, fluids, etc.) in the formation. Acoustic waves can be characterized by pressure changes and a particle displacement in a direction of which the acoustic wave travels. Elastic waves can be characterized by a change in local stress in material and a particle displacement. Acoustic and elastic waves may be referred to as pressure and shear waves, respectively; noting that shear waves may not propagate in water. Collectively, acoustic and elastic waves may be referred to as a seismic wavefield.

Material in a formation may be characterized by one or more physical parameters such as density, compressibility, and porosity. In the geologic environment 402 of Fig. 4, energy emitted from the one or more sources 442 can be transmitted to the formation 406; however, elastic waves that reach the seabed 408 will not propagate back into the water. Such elastic waves may be received by sensors of the nodes 410. The nodes 410 can include motion sensors that can measure one or more of displacement, velocity and acceleration. A motion sensor may be a geophone, an accelerometer, etc. As to pressure waves, the nodes 410 can include pressure wave sensors such as hydrophones.

In Fig. 4, the nodes 410 can include sensors for acquiring seismic wavefield information at the seabed 408. Each of the nodes 410 can include one or more hydrophones and/or one or more motion sensors (e.g., one or more geophones, one or more accelerometers, etc.).

A node can include various types of circuitry. Such circuitry can include circuitry that can digitize (e.g., analog to digital conversion (ADC) circuitry) and can include circuitry that can record signals (e.g., a microcontroller, a processor, etc., operatively coupled to memory). Each of the nodes 410 can include a housing 411, sensors 412 and 413, one or more microcontrollers or processors 414, one or more batteries 415, memory 416, ADC circuitry 417, a compass 418, communication circuitry 419, etc. As an example, a node can include one or more clocks, which may be amenable to calibration, synchronization, etc. For example, consider synchronizing to a signal, calibrating against a value, etc. As an example, a node can provide for receiving seismic energy and generating digital data that can be coded or otherwise stamped with information corresponding to time (e.g., according to one or more clocks). Various components of a node may be operatively coupled via wires, connectors, etc. A node can include one or more circuit boards (e.g., printed circuit boards, etc.) that can provide for electrical connections between various components, etc.

After deployment, one or more acoustic techniques may be utilized to determine node locations. A technique may employ acoustic pinging where acoustic pingers emit relatively high-frequency pings that are substantially above the maximum frequency of interest for seismic applications. Such relatively high-frequency acoustic signals can be picked up by one or more seismic sensors. Triangulation or one or more other techniques may be utilized to determine node locations for nodes deployed on an underwater surface such as a seabed.

Nodes may be utilized to acquire information spatially and temporally such as in a time-lapse seismic survey, which may be a four-dimensional seismic survey (e.g., a 4D seismic survey). A seismic image of a formation may be made for a first survey and a seismic image of the formation may be made for a second survey where the first and second surveys are separated by time (e.g., a lapse in time). In such an approach, a comparison of the images can infer changes in formation properties that may be tied to production of hydrocarbons, injection of water or gas, etc.

A first survey may be referred to as a baseline survey, while a subsequent survey may be referred to as a monitor survey. To minimize artifacts in differences between seismic images from successive lapses, a monitor survey may aim to replicate a configuration of a corresponding baseline survey. Where nodes are utilized at various positions on a seabed for a baseline survey, a monitor survey may aim to place nodes on the seabed in a manner that replicates the various positions of the nodes of the baseline survey. For the monitor survey, the nodes may be the same nodes, include some of the same nodes, include some different nodes or may be different nodes. A service may have a stock of nodes that can be utilized for various surveys where once a survey is complete, the nodes are retrieved, transported and positioned for another survey. Such a service may update, replace, etc., nodes from time to time.

A position to within a few meters of accuracy of one or more nodes may be determined via one or more of GPS, an acoustic positioning system (e.g., a short-baseline (SBL) or ultra-short baseline (USBL) acoustic system), and one or more other types of systems.

A node can include sensor circuitry for acquiring measurements of a seismic pressure wavefield and its gradient; consider sensor circuitry that can measure a seismic pressure wavefield and its gradient in vertical and crossline directions.

A node can include point-receiver circuitry. A point-receiver approach can combine hydrophones with tri-axial microelectromechanical system (MEMS) accelerometers. In such an approach, the MEMS accelerometers can measure a substantial bandwidth of particle acceleration due to seismic wavefields. Measurements of particle acceleration can be directly related to a gradient in a pressure wavefield. A node may include the ISOMETRIX technology, which includes point-receiver circuitry (SLB, Houston, Texas).

In the example of Fig. 4, one of the nodes 410 may be connected to one or more other nodes of the nodes 410 via a cable. A vessel may include a cable that is operatively coupled to at least one node. In the system 400 of Fig. 4, nodes may be deployed according to a survey plan in a grid pattern; consider placement of nodes on a seabed according to an x,y grid where distance between adjacent nodes may be of the order of hundreds of meters. As shown in the system 400, the seismic source vessel 440 may be employed with the one or more sources 442 that can emit energy, which can, in turn, be received via one or more of the nodes 410.

As an example, a common shot approach 480 may be utilized, as illustrated via the formation 406, the OBNs 410, the seismic source vessel 440 and the one or more sources 442. As explained, the vessel 440 can tow one or more sources at or below an air-water interface where the OBNs 410 can be positioned on a water-formation interface (e.g., a seafloor, seabed, ocean bottom, sea bottom, etc.). As shown, the energy of the source or the sources 442 passes through the water and then into the formation 406 where a portion of the energy is reflected at an interface (e.g., a reflector). As shown, energy can reflect off the interface and progress upwardly to the OBNs 410, which can be receivers that record the energy.

When seismic traces of a gather come from a single shot and many receivers, they can form a common shot gather; whereas, a single receiver with many shots can form a common receiver gather. A shot gather can be a plot of traces with respect to line distance (e.g., an inline or a crossline series of receivers) with respect to time. Such a plot may be referred to as an image, which includes information about a subsurface region; noting that traces may be processed to generate one or more other types of images of a subsurface region.

Also shown in Fig. 4 is an inset of a zero-offset vertical seismic profile (VSP) scenario 490. In such a scenario, an acquisition geometry may be limited to an ability to position equipment that is physically coupled to a rig 450. As shown, for given the acquisition geometry, there may be no substantial offset between the source 442 and a bore 452. In such a scenario, a zero-offset VSP may be acquired where seismic waves travel substantially vertically down to a reflector (see the layer 464) and up to receivers 428, which may be a receiver array. Where one or more vessels are employed, one or more other types of surveys may be performed. A three-dimensional VSP may be performed using a vessel. As an example, a VSP may be performed using one or more nodes, etc.

Some examples of techniques that can process seismic data include migration and migration inversion, which may be implemented for purposes such as structural determination and subsequent amplitude analysis. In seismic exploration, signal can be defined as a part of a recorded seismic record (e.g., events) that is decipherable and useful for determining subsurface information (e.g., relevant to the location and production of hydrocarbons, etc.). Migration and migration inversion are techniques that can be used to extract subsurface information from seismic reflection data.

As an example, a migration technique can include predicting a coincident source and receiver at depth at a time equal to zero; an approach that may be extended for heterogeneous media and to accommodate two-way propagation in a local sense at points from the source to a target reflector and back from the reflector to the receiver and in a global sense, separately for each of the two legs from the source to the reflector and from the reflector to the receiver. Such an approach for two-way wave propagation migration may provide for quantitative and definitive definition of the roles of primaries and multiples in migration where, for example, migration of primaries can provide subsurface structure and amplitude information.

Various techniques that can be used to predict a wavefield inside a volume from (measured) values of a field on a surface surrounding the volume involve Green's theorem. Green's theorem may be implemented, for example, as part of a process for a finite volume model prediction of the so-called "source and receiver experiment" for two-way waves at depth. As an example, Green's theorem can predict a wavefield at an arbitrary depth z between a shallower depth "a" and a deeper depth "b".

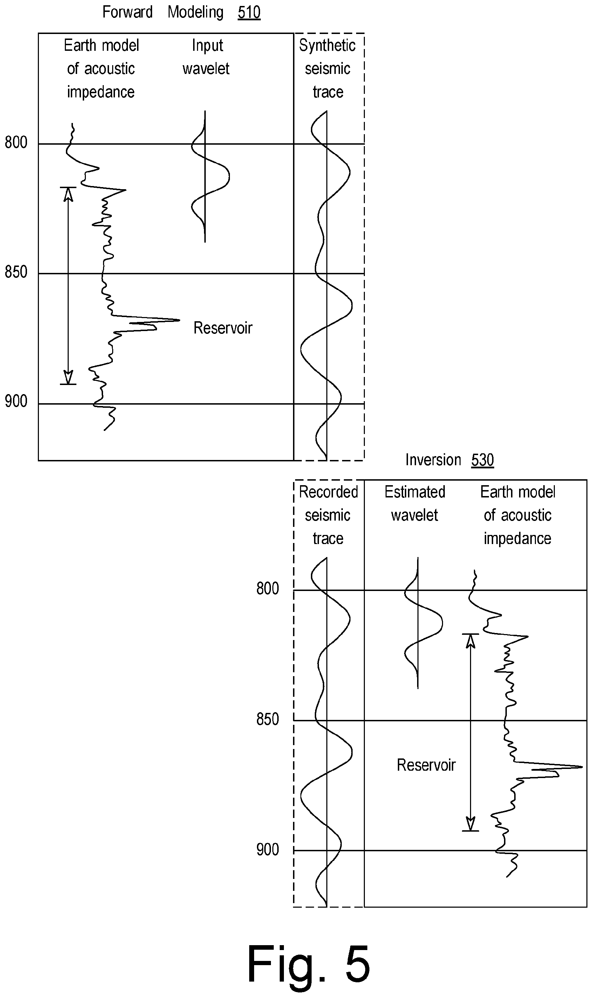

Fig. 5 shows an example of forward modeling 510 and an example of inversion 530 (e.g., an inversion or inverting). As shown, the forward modeling 510 progresses from an earth model of acoustic impedance and an input wavelet to a synthetic seismic trace while the inversion 530 progresses from a recorded seismic trace to an estimated wavelet and an earth model of acoustic impedance. As an example, forward modeling can take a model of formation properties (e.g., acoustic impedance as may be available from well logs) and combine such information with a seismic wavelength (e.g., a pulse) to output one or more synthetic seismic traces while inversion can commence with a recorded seismic trace, account for effect(s) of an estimated wavelet (e.g., a pulse) to generate values of acoustic impedance for a series of points in time (e.g., depth).

Acoustic impedance is the opposition of a medium to a longitudinal wave motion. Acoustic impedance is a physical property whose change determines reflection coefficients at normal incidence, that is, seismic P-wave velocity multiplied by density. Acoustic impedance characterizes the relationship between the acting sound pressure and the resulting particle velocity.

During the propagation of a seismic wave along a ray path, a seismic wave transmits through or reflects at a material boundary and/or converts its vibration mode between P-wave and S-wave. An observed amplitude of a seismic wave depends on an acoustic impedance contrast at a material boundary between an upper medium and a lower medium. Acoustic impedance, Z, can be defined by a multiplication of density, $\rho$, and seismic velocity, Vp, in each media. Acoustic impedance Z tends to be proportional to Vp for the many sedimentary and crustal rocks (e.g., granite, anorthite, pyrophyllite, and quartzite), except for some ultramafic rocks (e.g., dunite, eclogite, and peridotite) in the mantle.

As an example, an earth model may be referred to as a velocity model where, for example, one or more physical properties as may be associated with one or more subsurface structural features. For example, consider a velocity model that includes parameters as to acoustic impedance, which, as mentioned, can depend on density and seismic velocity in a material. Where an energy wave approaches a boundary (e.g., interface) between two different materials, a difference in impedance may at least in part determine how the energy wave may reflect and/or transmit.

In various instances, an inversion problem may be ill-posed for one or more reasons. Recorded data can include discrepancies including, for example, missing near offsets (e.g., due to gaps, etc.), and multiple events with other artifacts that contaminate the model of primaries that is inverted for. Artifacts can also be associated with inversion inaccuracies coming from inaccurate physics simulation (e.g., inversion of 3D data using 2D inversion, wavelet estimation errors, etc.).

For various reasons, a seismic survey may have coverage issues. For example, certain subsurface structures may impact "illumination" of one or more regions by seismic energy. In seismology, illumination can refer to an ability for seismic energy to fall on a reflector and thus be available to be reflected. Illumination can depend on source-receiver configuration (e.g., a survey geometry) and velocity distribution such as, for example, irregular velocity contrasts that may bend ray paths differently than adjacent ray paths. Various regions can have complicated velocity variations, for example, consider high-velocity contrast regions and subsalt regions.

A subsalt region can be an exploration and production play type in which prospects exist below salt layers. Prospecting for such regions below salt layers can pose challenges with respect to illumination, which may result in seismic data of poor quality. The Gulf of Mexico includes subsalt-producing fields; noting that subsalt regions also exist in other parts of the world such as, for example, offshore Brazil in the Santos, Campos and Espirito Santo basins.

A region below salt (e.g., a subsalt region) may be referred to as a pre-salt layer. As an example, a region may include a diachronous series of geological formations on a continental shelf of an extensional basin formed after the break-up of Gondwana, which may be characterized by deposition of thick layers of evaporites that can be composed mostly of salt. In various regions, some petroleum generated from sediments in a pre-salt layer may not have migrated upward to post-salt layers above, for example, due to one or more salt domes. Such types of regions exist off the coast of Africa and the coast of Brazil. Total pre-salt hydrocarbon reserves are estimated to be a substantial fraction of the world's hydrocarbon reserves.

Off the coast of Brazil, oil and natural gas reserves lie below an approximately 2,000 m (6,600 ft) thick layer of salt, which in turn is beneath more than 2,000 m (6,600 ft) of post-salt sediments in places, which in turn is under water depths between 2,000 m and 3,000 m (6,600 ft and 9,800 ft) in the South Atlantic. Drilling through rock and salt to extract pre-salt oil and gas can be complicated and costly. As explained, seismic surveying can be challenging in such regions, which can introduce uncertainties in planning, drilling, etc.

A 3D seismic dataset can be referred to as a cube or volume of data; a 2D seismic data set can be referred to as a panel of data. To interpret 3D data, processing can be on the "interior" of the cube, which tends to be an intensive computation process because massive amounts of data are involved. For example, a 3D dataset can range in size from a few tens of megabytes to several terabytes or more.

A 3D seismic data volume can include a vertical axis that is two-way traveltime (TWT) rather than depth and can include data values that are seismic amplitudes values. Such data may be defined at least in part with respect to a time axis where a trace may be a data vector of values with respect to time.

Acquired field data may be formatted according to one or more formats. For example, consider a well data format AAPG-B, log curve formats LAS or LIS-II, seismic trace data format SEGY, shotpoint locations data formats SEGP1 or UKOOA and wellsite data format WITS.

As to SEGY, which may be referred to as SEG-Y or SEG Y, it is a file format developed by the Society of Exploration Geophysicists (SEG) for storing geophysical data. It is an open standard, and is controlled by the SEG Technical Standards Committee, a non-profit organization. The format was originally developed in 1973 to store single-line seismic reflection digital data on magnetic tapes. The most recent revision of the SEG-Y format was published in 2017, named the rev 2.0 specification and includes certain legacies of the original format (referred as rev 0), such as an optional SEG-Y tape label, the main 3,200-byte textual EBCDIC character encoded tape header and a 400-byte binary header.

A format referred to as ZGY (or zgy) is a file format that can be used for storing 3D seismic trace data. Data may be converted to ZGY from SEG-Y format. The ZGY format supports compression of data. ZGY uses bricking to store multiple resolutions of a dataset. As an example, a brick may include 64x64x64 samples, though brick sizes can vary. ZGY can be a compressed format of the SEG-Y data such that the ZGY format demands less storage space, where ZGY format data may be readily exchangeable. As an example, a compressed brick may be 4x4x4 and may be referred to as a micro-brick (e.g., where a 64x64x64 brick may be referred to as a macro-brick).

As an example, a method may provide for decoupling brick size for compression and the brick size for random access in a particular format (e.g., consider the OPENZGY (or OPEN ZGY) format (see, e.g., Open Subsurface Data Universe (OSDU) group of open-source projects, which includes an OPENZGY software development toolkit (SDK)). As an example, a random-access macro-brick size may be set by default, for example, to 64x64x64 samples; noting that one or more other sizes may be specified and/or utilized. As an example, a compression brick size may be smaller such as, for example, 4x4x4 samples. As an example, a full 3D seismic volume may be, by default, partitioned into a set of 64x64x64 sample sub-cubes (bricks or macro-bricks), which in turn is partitioned into a set of 4x4x4 sample bricks (e.g., micro-bricks). In such an example, micro-bricks may be compressed individually and independently of each other, whether in series and/or in parallel.

As explained, a file may include a header or headers. For example, the SEG-Y format may include 240-byte trace identification header values. For example, byte numbers 37-40 provide for distance from source point to receiver group (e.g., center of the source point to center of the receiver group), byte numbers 41-44 provide for receiver group elevation, byte numbers 45-48 provide for surface elevation at source, byte numbers 49-52 provide for source depth below surface, byte numbers 61-64 provide for water depth at source, byte numbers 73-80 provide for source coordinates in X and Y (e.g., UTM easting coordinate or longitude and northing coordinate or latitude), and byte numbers 81-88 provide for group coordinates in X and Y; noting that byte numbers 89-90 may specify coordinate units (e.g., length in meters or feet, seconds of arc, decimal degrees, or degrees, minutes, and seconds (DMS). In various instances, seismic coordinates may be specified as geographic coordinates and/or grid coordinates; noting that a coordinate reference system (CRS) may be defined. As an example, one or more headers may be utilized, for example, consider a binary header, an extended textual header, and trace headers. As an example, one or more headers may include information that may facilitate one or more techniques to reduce one or more artefacts, such as, for example, one or more acquisition artefacts (e.g., footprint artefacts, etc.).

As an example, one or more of various formats may be utilized for seismic data, for example, for storage, processing, transmission, rendering, etc.

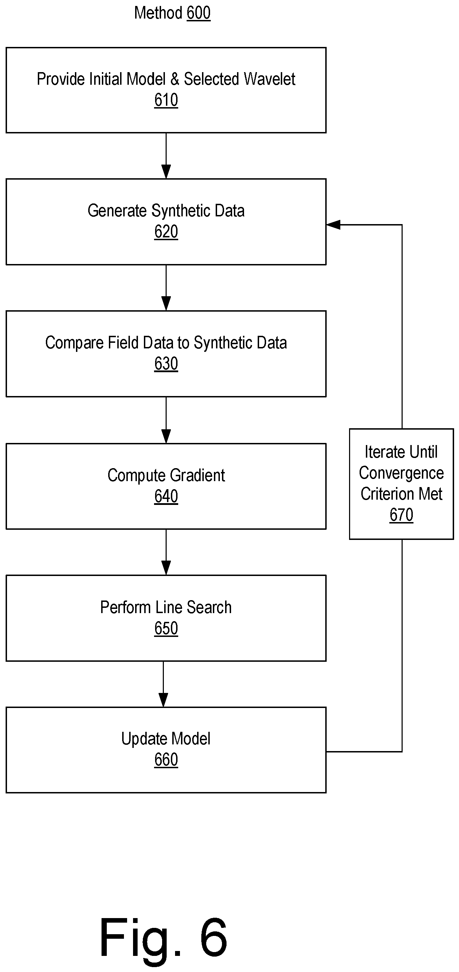

Fig. 6 shows an example of a method 600 that can perform a full waveform inversion (FWI). As shown, the method 600 includes a provision block 610 for providing an initial model and a selected wavelet, a generation block 620 for generating synthetic seismic data using the model and the wavelet, a comparison block 630 for comparing the synthetic seismic data to field seismic data, a computation block 640 for computing a gradient, a performance block 650 for performing a line search, and an update block 660 for updating the model to provide an updated model, which may then be used by the generation block 620. As shown, per an iteration block 670, the method 600 can proceed in an iterative manner until one or more convergence criteria are met, which may be based on error between synthetic seismic data and field seismic data. As an example, the method 600 may be implemented by a computational framework such as, for example, the OMEGA framework.

In various instances, a method may include extracting a source wavelet (e.g., a source signature) from seismic data. As an example, a source wavelet may be specified in a file, such as, for example, a SEGY file.

While Fig. 6 shows an example of a FWI technique, one or more other types of iterative inversion techniques include, for example, least-squares reverse time migration (LS-RTM) and image domain inversion (IDI).

As an example, one or more techniques may employ one or more wave equations. For example, a wave equation may be a formulated expression that can represent wave displacement and wave velocity (V) as functions of space (e.g., x, y, z) and time (t). As an example, a framework may employ a wave equation with angle-dependent model parameters. In such an example, the wave equation may be applied in a full waveform inversion (FWI), for example, as to a pre-stack angle gather.

FWI is a technique that can be employed for estimating geological parameters, for example, by matching observed seismic data with numerically modeled data. FWI may utilizes data discrepancies between observation and synthetic numerical simulation results to compute model updates, which may then be used to iteratively refine model parameters representing the Earth's subsurface properties.

Generally, an FWI procedure can include two main phases during each iteration: a modeling phase, where simulated data are generated, and an imaging phase, responsible for gradient computation (e.g., a model update phase). As explained, FWI may utilize a wave equation such as a conventional wave equation, which may be denoted as:

$$\mathcal{L}(P, m) = S, \qquad (1)$$

where P represents the wavefield, m is the model parameter, and $S$ is the source.

As explained, FWI is an iterative technique that updates one or more model parameters to minimize the difference between the observed and simulated data. In FWI, a goal can be to find the model parameters that can reproduce the observed data as closely as possible through numerical simulation (e.g., generation of synthetic data using a model). In the case of a least-squares objective function, the misfit between observed and simulated data can be measured by:

$$\min_{m} J(m) = \frac{1}{2} \|P(m) - d\|_2^2, \qquad (2)$$

where J is a function measuring the misfit between the simulation data and the observed data, $\|\cdot\|_2^2$ stands for the squared L2 norm.

As an example, for the conventional wave equation, the objective function can be minimized by iteratively updating the parameters with a line-search method:

$$m_{k+1} = m_k + \alpha_k g_k, \qquad (3)$$

where at the $k$-th iteration, the model is updated with a step size $\alpha_k$ and model updating direction $g_k$.

In the foregoing approach, the model updating direction can be a descent direction based on a gradient computed to minimize the misfit function. In such an approach, $g_k$ is a function of the forward wavefield $P(m_k)$ and adjoint backpropagated wavefield $R(m_k)$:

$$g_k = \mathrm{F}(P(m_k), \; R(m_k)). \qquad (4)$$

In various instances, FWI may be employed as an iterative inversion process that may be limited as to results thereof by knowledge, data, techniques, etc. As an example, an iterative inversion process may aim to generate an accurate result expeditiously whereby computed gradients help to drive convergence to such a result (e.g., as a global solution rather than a local solution in solution space).

As an example, FWI may be applied in various contexts where there may be nonideal data sets (e.g., P-wave only measured in a very limited set of offsets and azimuths, etc.), nonideal techniques (e.g., consider cost of using a fully anisotropic solution to the elastic wave equation as being prohibitive, etc.), and nonideal earth models. In various instances, even where acoustic anisotropic wave propagation is used in forward modeling, an approach may rely solely on updating the velocity component of an earth model; noting that, where appropriate, one or more anisotropic parameters may be considered for updating.

As an example, an iterative inversion process may provide for gradient computations as to one or more types of gradients, which may correspond to one or more earth model parameters (e.g., density, velocity, acoustic impedance, anisotropy, etc.). As noted, acoustic impedance and velocity can be related. As an example, a gradient may be a velocity gradient that effectively provides for updating one or more parameters of an earth model such that wave velocities may be more accurately modeled. As an example, a least-squares FWI process may provide for solving an acoustic wave equation in a manner that optimizes over velocity and/or one or more anisotropic parameters to minimize data misfit. As explained, as an example, a model updating direction in an iterative inversion process may be a descent direction based on gradient generation to minimize a misfit function. As explained, gradient generation may be relevant to one or more aspects of an iterative inversion process.

As an example, a framework may implement an automatic gradient balancing mask for an iterative inversion process (e.g., an FWI process, etc.). In gradient descent-based inversion earth model building processes, such as, for example, FWI, a technique for gradient pre-conditioning may be performed, which may facilitate the inversion process. For example, gradient pre-conditioning may provide for an ability to successfully invert and/or invert using fewer iterations (e.g., lesser computational resources and/or time). As to fewer iterations, in addition to saving resources and/or time, a reduction in number of iterations may reduce digital roundoff error, which may provide for a more accurate result. Further, in various instances, inversion with a well-balanced gradient tends to converge faster while being less likely to be trapped in a local minimum, resulting in reduced cost, faster turnaround time, better results, and less human intervention.

In various instances, an inversion may account for more than one seismic survey. For example, consider an inversion that utilizes seismic data acquired from more than one seismic survey where some amount of overlap exists between at least two seismic surveys. In such an example, overlap may be subsurface overlap as energy spreads from a source into a subsurface environment. Hence, even if two acquisition geometries for two different seismic surveys do not physically overlap (e.g., at surface in a land survey, at an ocean bottom in a marine survey, at or near an air/water interface in a marine survey, etc.), there may be overlap due to the spread of energy and illumination of one or more subsurface structures that may be common to the two different surveys.

Where data from multiple seismic surveys are to be inverted (e.g., multi-survey FWI, etc.), where some amount of overlap exists, gradient pre-conditioning can be quite relevant as to outcome. For example, differences in survey acquisition parameters and overlapping survey regions may lead to generation of so-called hotspots and/or illumination holes in a computed gradient, which, in turn can result in an unbalanced and poorly conditioned gradient.

Manual workflows that aim to mitigate gradient balancing problems can involve carefully matching data between each seismic survey. Further, such a manually intensive approach tends to be unique for a particular set of surveys such that a manual workflow will differ substantially from one project to another, for example, depending on the type of survey involved and the acquisition details of each survey. Moreover, such a manual workflow becomes progressively more difficult as more and more surveys are combined; noting that a current trend exists as to combining surveys for inversion.

As mentioned, a framework may provide for implementation of an automated workflow for gradient preconditioning as part of an inversion process. For example, consider a framework that may implement an automated workflow within an FWI process that can generate a gradient balancing mask and, if appropriate, an associated properly scaled seismic source wavelet, whether for a single seismic survey inversion and/or a multiple seismic survey inversion.

In the context of multi-survey FWI, balanced seismic source wavelets together with a gradient balancing mask can take into account one or more of survey overlap, acquisition differences, source and receiver fold, and geometric spreading. In various examples, a gradient balancing mask, with or without source wavelet generation, may be utilized in one or more FWI model updates to expedite convergence. Noting that, in various instances, source wavelet may be specified, while in other instances, it may be generated (e.g., a generated source wavelet for each seismic survey considered). As to a single survey FWI process, a framework may implement a workflow for a single survey that can provide for gradient balancing, for example, by compensating source and/or receiver illumination and, for example, amplitude decay due to geometric spreading.

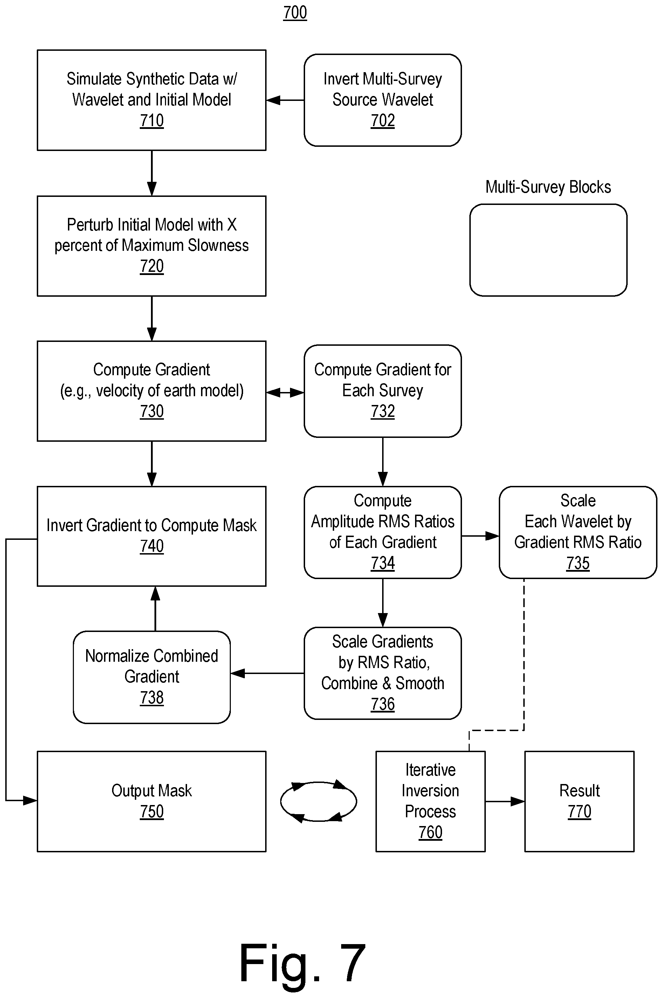

Fig. 7 shows an example of a workflow 700 that may be implemented by a framework as part of an inversion process that inverts data, including at least seismic data, to generate a result where the result characterizes a subsurface geologic region (e.g., with respect to structure, indications of hydrocarbons, indications as to carbon capture and storage (CCUS), etc.). In the example of Fig. 7, the workflow 700 may be implemented for a single seismic survey scenario and/or a multiple seismic survey scenario, which may be, for example, a number of surveys acquired at the same time, overlapping in time, and/or at separate times.

As an example, one or more inversion processes may utilize data beyond seismic data, for example, to help build, calibrate, etc., an earth model. As explained, an earth model may be a velocity model. Accurate subsurface imaging can depend on various factors, which may include a velocity model, a migration technique, and input data. A survey may aim to provide adequate illumination for acquisition of reliable data even in complex geological settings. As explained, an FWI process can utilize an earth model, which may be built using various techniques that may aim to account for geologic complexity. For example, consider utilization of well logs with indications of formation tops to facilitate building of an initial earth model. In such an example, one or more techniques may be employed for seismic-to-well ties, which may improve bridging time and depth through use of a velocity model (e.g., an earth model). As to acquired data from one or more seismic surveys, such data may be subjected to one or more techniques for quality control and/or other analysis. For example, consider deghosting of marine seismic survey data, multiple attenuation of seismic reflection multiples, etc.

In the example of Fig. 7, the workflow 700 includes a simulation block 710 for simulating synthetic data with a wavelet and an initial model, a perturbation block 720 for perturbing the initial model according to a metric such as a percent of maximum slowness (e.g., reciprocal of velocity), a compute block 730 for computing a gradient (e.g., a gradient to be used in an inversion process as to velocity related updates of an earth model), an inversion block 740 for inverting the gradient to compute a mask, an output block 750 for outputting the mask, and an iterative inversion process block 760 for utilizing one or more masks to invert data to generate a result per a result block 770, where the result characterizes an imaged region of the Earth. In such an example, the iterative inversion process 760 may utilize one or more masks, which may be for one or more iterations, which may be each iteration or fewer than each iteration where a number of iterations are performed to reach convergence according to one or more convergence criteria.

As explained, the workflow 700 may handle data from multiple seismic surveys. In such an example, an inversion block 702 may invert for a multi-survey source wavelet, which may be utilized in the simulation block 710. Further, the compute block 730 may operate via a compute block 732 for computing a gradient for each of the surveys where, for example, another compute block 734 provides for computing a metric such as amplitude root mean square (RMS) ratios of each gradient (e.g., for each of a number of difference, seismic surveys), a scale block 736 provides for scaling the multiple gradients by RMS ratio, followed by combining (e.g., stacking) and smoothing (e.g., consider Gaussian smoothing, etc.), and a normalization block 738 for normalizing the smoothed, combined, scaled gradient (e.g., using a maximum value for normalization, etc.). Further, a scale block 735 may provide for scaling each wavelet by a gradient RMS ratio (see, e.g., dashed line linking the blocks 735 and 760).

As explained, the workflow 700 may provide for outputting a mask for one or more iterations of an iterative inversion process. In such an example, the workflow 700 may return to the simulation block 710 where, rather than the initial model, the latest updated model of the iterative inversion process is utilized.

As an example, a workflow may include extracting a source wavelet of each survey with source wavelet inversion, simulating synthetic data using an inverted wavelet(s) and smoothing an initial input model. In such an example, the workflow may include perturbing the initial model by a small known amount (e.g., consider 1 percent of maximum slowness applied universally), separately computing and collecting the gradient of each survey, obtaining the RMS ratio of each survey and then using the RMS ratio to scale the source wavelets and the gradients. In such an example, the workflow may include combining the multi-survey gradients to generate a combined gradient and then applying Gaussian smoothing, followed by normalizing the combined gradient by the maximum value. Such a workflow may then invert the normalized gradient, for example, with a predetermined threshold, to create a gradient mask. Given the gradient mask, it may be applied as a gradient balancing mask to a gradient in an inversion of an iterative inversion process (e.g., an FWI process).

As an example, a framework may include components that may be called upon, instantiated, assembled, etc., to perform one or more workflows. As an example, the block 702 of the workflow 700 may represent a component while various other blocks may be combined in an assembly of components, whether for individual or multiple survey operations.

As an example, a dual forward modeling technique may be employed to simultaneously compute data with an input model as well as a perturbed model to reduce demand for additional disk usage for storing synthetic data and to reduce input/output from a simulation such as, for example, the simulation block 710. As a workflow may apply amplitude matching between observed and synthetic data in an inversion, the workflow may use the same RMS ratio to scale both a source wavelet and gradients without recomputing the data and gradients. Such an approach may save additional demand for disk storage and computation. As an example, a generated gradient balancing mask may be applied to an inversion gradient as a preconditioner, for example, as a weighting function rather than as a binary mask with 0s and 1s.

As an example, a framework may implement one or more aspects of a workflow using a message passing interface protocol (MPI protocol). For example, consider a workflow where separately computing and collecting a gradient of each survey, obtaining the RMS ratio of each survey and then using the RMS ratio to scale the source wavelets and the gradients, combining the multi-survey gradients then applying Gaussian smoothing, normalizing the combined gradient by the maximum value, and inverting the gradient with a predetermined threshold to create gradient mask are performed, optionally along with applying the gradient mask, using an MPI protocol. In such an approach, use of the MPI protocol may help to expedite computations using multiple compute nodes.

As explained, an inversion process may be improved through gradient conditioning (e.g., gradient pre-conditioning). In various instances, a method may aim to balance a gradient such that the gradient is well-balanced, which may be demonstrated quantitatively (e.g., via a spatial assessment, an assessment as to convergence, an assessment as to accuracy of results, etc.). In various instances, a well-balanced gradient can yield better results and speed up convergence. As explained, an inversion process may be performed using data from more than one seismic survey.

In multi-survey FWI, one or more of different acquisition geometries, seismic sources, receiver responses, and survey overlap may have an impact on a gradient, particularly where multiple surveys are combined in an effort to improve illumination of a targeted region. In various instances, without attention to gradient balance, a gradient may be severely ill-conditioned, which may result in relatively high uncertainty in an inversion result.

As explained, manual attempts at gradient balancing for an inversion process may help to mitigate some imbalance, for example, through careful manual scaling of the input data and source wavelets, and decimating shots to have roughly even shot distribution. However, manual intervention may face various decisions as to how to handle data, for example, consider a decision as to whether to completely discard part of a survey in a survey overlapping region to reduce complexity of uneven data coverage. Such decisions may have a substantial impact on an inversion process and results thereof, if obtainable (e.g., if convergence to a reasonable solution can be achieved). Further, such decisions may be handled in a manner that is specific to a project such that a decision-making process for one project may not be informative for another project. Manual intervention may be in part subjective and differ from individual-to-individual, which may make results from different projects understandable to an extent that decisions made are known. In various instances, decisions by an individual or individuals may not be recorded and/or not discernable from results alone. As an example, a framework may provide for implementing an automated method whereby one or more techniques are applied for gradient conditioning, for example, as to an inversion process for a single survey data and/or for an inversion process for multi-survey data.

As an example, a framework may help to address complicated and time-consuming procedures, particularly where more surveys are combined. As an example, a framework may help to address one or more procedures that may otherwise be is prone to user error. As an example, a framework may provide for performing a workflow with quality control (QC) of data to improve gradient conditioning (e.g., gradient balancing) where geological feature differences and/or survey limitations exist. As an example, a framework may provide for reduction of issues such as, for example, Illumination holes and/or hotspots, with respect to an inversion process. As explained, a framework may provide for automatically generating a gradient mask and/or boosting and/or tuning down one or more portions of a gradient. As an example, a framework may provide for monitoring progress of an inversion process, which may provide for adjusting one or more gradient conditioning techniques. In such an example, the framework may provide for automated adjusting of one or more gradient conditioning techniques. For example, if convergence is acceptable, a mask for a prior iteration of an iterative inversion process may be utilized rather than mask updating, which may provide for a reduction in computing resources and/or time. As an example, a framework may provide for automated integration of convergence data and gradient conditioning such that one or more gradient conditioning techniques may be implemented to improve convergence if such improvement is warranted and, for example, likely to improve an inversion process result. As an example, a framework may provide for assuring a gradient mask is effective and making timely adjustments when appropriate. As an example, a framework may provide for automated gradient mask generation in a manner that may distinguish strong and/or weak gradient amplitude issues, which may be due to one or more illumination effects, from one or more issues that may be derived from modelling error (e.g., or one or more other types of non-illumination related error).

As explained, gradient balancing issues may arise in single survey and/or multi-survey scenarios. As explained, a single survey FWI process may suffer from one or more gradient balancing issues. As to single or multi-survey scenarios, as a seismic wave propagates deeper into a subsurface geologic region, wave energy decays naturally. Due to such decay or reduced wave energy density, a deeper portion of a targeted region may be poorly illuminated compared to a shallower portion of the targeted region, where both the deeper portion and the shallower portion may be represented by a common model.

As wave energy may be less in the deeper portion, a gradient can be weaker, for example, due to natural processes, a gradient may become weaker (e.g., smaller) with respect to depth. As an example, to compensate for weaker amplitude in a deeper portion of a region, various techniques may implement source illumination weights that may be applied to a gradient on a shot basis (e.g., a shot-by-shot norm) or on a survey basis after stacking (e.g., a global norm). However, such source illumination weight-based techniques may have one or more limitations. For example, source illumination weights may lack information regarding receiver-side illumination; therefore, such weights may not be entirely accurate and may possibly overcompensate one or more portions of a gradient with weak amplitude. Further, applying shot-based weights may possibly, in effect, boost steep dip noise such as swing noise, thereby making a gradient less robust.

As an example, a framework may provide for addressing one or more gradient balancing issues that may arise in single survey and/or multi-survey scenarios. As explained, a framework may provide for reducing human intervention by performing in an automated manner and/or semi-automated manner. As to a semi-automated manner, one or more graphical user interfaces (GUIs) may be generated and rendered to one or more displays where visualizations of data, masks, convergence rate, convergence error, images, etc., may allow for user assessment and optionally user intervention, which may be performed in an informed manner as to how gradient balancing is impacting an inversion process, whether beneficially and/or detrimentally.

As an example, a framework may operate in a semi-automated manner with relatively minimal human intervention while automatically producing QC products to be presented to one or more users via one or more GUIs (e.g., one or more dashboards, etc.).

As an example, a framework may implement a method that utilizes real acquisition data as input such that the method takes into consideration real acquisition parameters and their possible effects as to an inversion process. As an example, a framework may provide for a generated mask that accounts for source illumination effects (e.g., via source illumination weights, etc.) and that accounts for receiver illumination effects, which tend to be difficult to obtain through manual intervention techniques.

As an example, a framework may implement a method that probes the response of input surveys to a known fixed model error with respect to an input model such that the framework can separate illumination variation from unknown model errors.

As explained, a framework may provide for implementation of various techniques, which may be provided in the form of components (e.g., processor-executable instructions, etc.). As mentioned, a framework may include a source wavelet inversion component and one or more gradient mask creation components. As an example, a framework may provide for generation of a gradient balancing mask (e.g., a gradient conditioning mask) output and/or a scaled source wavelet output, which may be utilized in one or more iterations of an iterative inversion process (see, e.g., the blocks 750 and 735 of the workflow 700 of Fig. 7).

As explained, a framework may implement a workflow that includes simulating synthetic seismic data using a starting earth model and true source-receiver pairs, which may be extracted from input data for an iterative inversion process (e.g., FWI, etc.). In such an example, the input data may be in a file with a format such as, for example, the SEGY format. As an example, a workflow may include perturbing the starting earth model by a fixed small amount (e.g., consider a few percent or less, which may be based on a maximum slowness, etc.). In such an example, the non-perturbed earth model may be regarded as a "true" model, the simulated data may be regarded as "observed" data, and the perturbed earth model may be regarded as an "initial" model for an illumination analysis. With synthetic seismic data and the perturbed earth model as the input to an iterative inversion process (e.g., FWI), a workflow may include computing the earth model gradient of each of a number of seismic surveys separately. Due to different acquisition parameters and source signature, strength of an earth model gradient among different surveys may differ substantially and even, at times, drastically. As an example, a workflow may include stacking earth model gradients together in a manner whereby one survey does not necessarily dominate an earth model update in an iterative inversion process. For example, a workflow may aim to overcome gradient strength differences by computing the RMS value of each gradient. In such an example, a workflow may then boost a weak survey gradient based on the RMS ratio before stacking them together (e.g., combining them together). In such an approach, the RMS ratio may be stored and used for one or more subsequent inversions. While RMS is mentioned, along with RMS ratio, one or more other metrics may be utilized. For example, consider one or more types of normalization statistics that may be utilized to characterize gradients for a workflow that may involve data from multiple surveys. As an example, normalization may involve utilization of a survey normalization factor that may be utilized, for example, in a multi-survey workflow that processes data from multiple, different surveys.

As explained, a workflow may address a relative gradient strength issue for scenarios involving multiple seismic surveys. In such an approach, the workflow may then focus on local illumination balancing issues, as may be due to one or more factors (e.g., survey overlapping, gap(s), etc.). As explained, an earth model may be perturbed by a fixed known amount (e.g., as to one or more parameters). In such an approach, the gradient may be expected to be relatively uniform. However, due one or more factors such as, for example, geometrical spreading and/or uneven illumination, the gradient from an illumination analysis tends to lack uniformity. As explained, a gradient balancing mask may be generated as an earth model gradient conditioner that may be based on relative amplitude to boost one or more weak portions of the gradient (e.g., coldspot portions) and/or to tune down one or more hotspot portions, as may be associated with survey overlapping or different geology structures (e.g., top of salt backscattering, etc.).

As an example, a workflow may be implemented with some amount of optimization, which may include execution prior to execution of an actual iterative inversion process such that the cost of the workflow may be approximately the cost of roughly one gradient computation. As an example, a generated gradient balancing mask may be smooth enough that repeated regeneration of the mask may not be necessary for each iteration of an iterative inversion process (e.g., an FWI process); rather, a mask may be utilized, where appropriate, for more than a single iteration, which may be for a single frequency band or an entire frequency band, for example, until an earth model is substantially different than the starting earth model. As an example, a gradient balancing mask may be a preconditioner to be utilized in gradient processing. As explained, a workflow may include applying a gradient balancing mask to speed up earth model convergence in an iterative inversion process (e.g., an FWI process).

As an example, a workflow may include perturbing an input earth model by approximately 1 percent of slowness across the earth model to generate two synthetic seismic data earth model gradients separately (e.g., one for each of two seismic surveys). In such an example, the RMS ratio of the two survey's synthetic seismic data earth model gradients may be utilized as a scaling factor, which may be used in a subsequent inversion. In such an example, a true stacked multi-survey gradient using the scaling factor alone may be generated. In such an example, the two surveys' gradients may now be computed to contribute relatively equally. However, in such an example, an overlapping survey region of the two surveys may now have a larger gradient magnitude. Such a residual illumination problem can be mitigated by a gradient balancing mask, for example, using an illumination probing method. As explained, a gradient balancing mask may be generated as an earth model gradient conditioner where, for example, values may be positive and may be rendered using colors (e.g., ranging from red to blue), which may differ from color coding in a gradient plot where blue may indicate positive values and where red may indicate negative values. As explained, small values in a mask may correspond to regions of large magnitude in the gradient, while the large values correspond to regions of small magnitude, for example, matching the pattern in a new gradient. As explained, a gradient balancing mask may capture illumination characteristics of a true gradient, such as, for example, hotspots of a top of salt (e.g., a salt dome, a salt layer, etc.) backscattering and/or overlapping of survey regions of multiple surveys (e.g., and/or coldspots, etc.). As an example, a gradient balancing mask may be applied in an iterative inversion process where such an approach may improve a final earth model output by the iterative inversion process, which may be improved as to balance, as a gradient balancing mask may provide for earth model update from relevant information in multiple surveys.

As an example, an iterative inversion process may utilize a number of frequency bands. For example, consider a process that may utilize more than two bands and up to 10 bands or more. As an example, bands may be within frequency ranges, such as, for example, 1.6 Hz to 2.0 Hz, 2.5 Hz to 3 Hz, etc., where frequencies may generally be within a range from 0.5 Hz to 20 Hz. As an example, a workflow may provide for generating gradient conditioners for different frequency bands, which may differ as to patterns (e.g., for hotspots, coldspots, etc.). As an example, a coldspot may correspond to a gap in illumination or an otherwise low signal region. As an example, a mask may be suitable for a particular frequency or frequency range. As an example, a workflow may assess whether or not a gradient conditioner generated from one frequency or frequency band may be applicable to another frequency or frequency band such that another gradient conditioner (e.g., mask, etc.) does not necessarily have to be generated.

As explained, a workflow may account for source coverage and/or receiver coverage. As to ocean bottom node (OBN) surveys, a concept known as reciprocity may be utilized, which may assume that source-receiver paths are reciprocals of receiver-source paths, as based on acquisition geometry.

As explained, a workflow may provide for distinguishing illumination-based issues from model-based issues. As explained, a mask may provide for addressing illumination imbalances, as may be from one or more seismic surveys.

As an example, a gradient conditioner or gradient conditioners may include information as to characteristics of a survey or surveys and/or a subsurface structural feature or features. As an example, a method may include generating a plan for a future seismic survey based on one or more gradient conditioners. For example, a future seismic survey may provide for improved balance, which may reduce hotspots and/or coldspots.

As an example, a workflow may be implemented in a manner that may account for energy density, as may be due to spatial (e.g., volume) increases away from a source of energy (e.g., as a wave travels in a region), and/or in a manner that may account for attenuation, for example, depending on type of modeling engine utilized to perform a simulation to generate synthetic seismic data. For example, a visco-acoustic simulation engine may provide for taking attenuation into account. In such an example, one or more quality factors (e.g., Q-factors) of a model may be known, estimated, etc. In various instances, attenuation of seismic energy (e.g., quantified by the quality factor Q or Q-factor) may have an impact on the seismic waveforms, especially in instances where fluid-saturated rocks may exist within a subsurface region. Attenuation can be a dissipative process that may be phenomenologically represented by one or more viscoelastic terms in a model. As an example, a Q-factor may be known or estimated given well data (e.g., well log data, etc.). As an example, a model may provide for viscoelastic modeling in one or more regions where characteristics are sufficiently known or estimated in the one or more regions.

As an example, a mask may be representative of a velocity gradient for an iterative inversion process. As explained, a workflow may utilize source and/or receiver locations (e.g., acquisition geometry) and a wavelet as may be emitted by one or more sources.

As an example, as a model (e.g., an earth model, a velocity model, etc.) is updated, one or more structural features may be updated. For example, consider a location of salt in a region whereby an iteration of an inversion process provides for updating the location of the salt. In such an example, the location of the salt may impact illumination. For example, a salt dome may result in one or more shadow zones below the salt.

In an example for a FWI process, a framework-implemented workflow generated a gradient mask using multi-survey data to demonstrate effectiveness in gradient balancing.

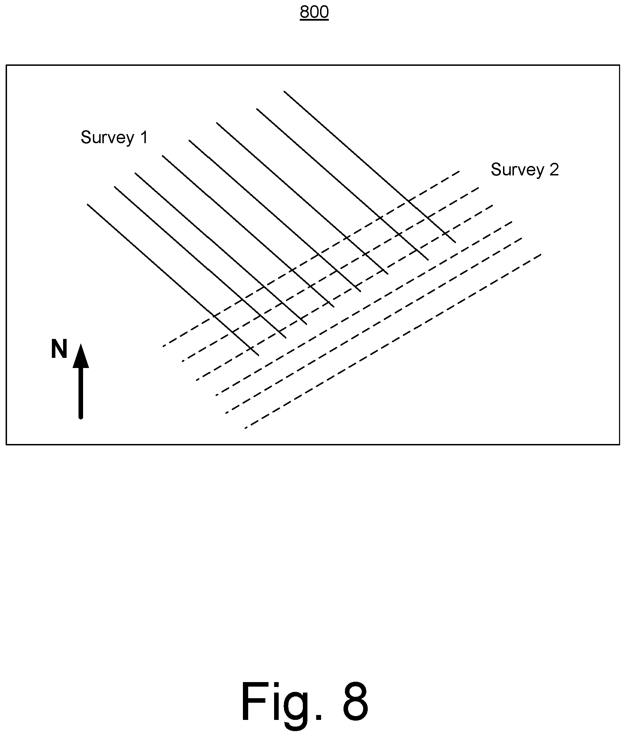

Fig. 8 shows an example graphic 800 for acquisition geometries of two seismic surveys, which include overlap in the acquisition geometries and overlap in their illuminated regions. In particular, a framework was utilized to generate a gradient mask using multi-survey data acquired from two narrow azimuth surveys with different shooting directions at 45 degree and 90 degree respect to the north, noting again, they are partially overlapped as to an area of interest. In the example of Fig. 8, the green dots represent source locations and a purple box indicates a boundary for inversion. Further, a thick green line indicates the 45 degree survey data position relative to the 90 degree survey.

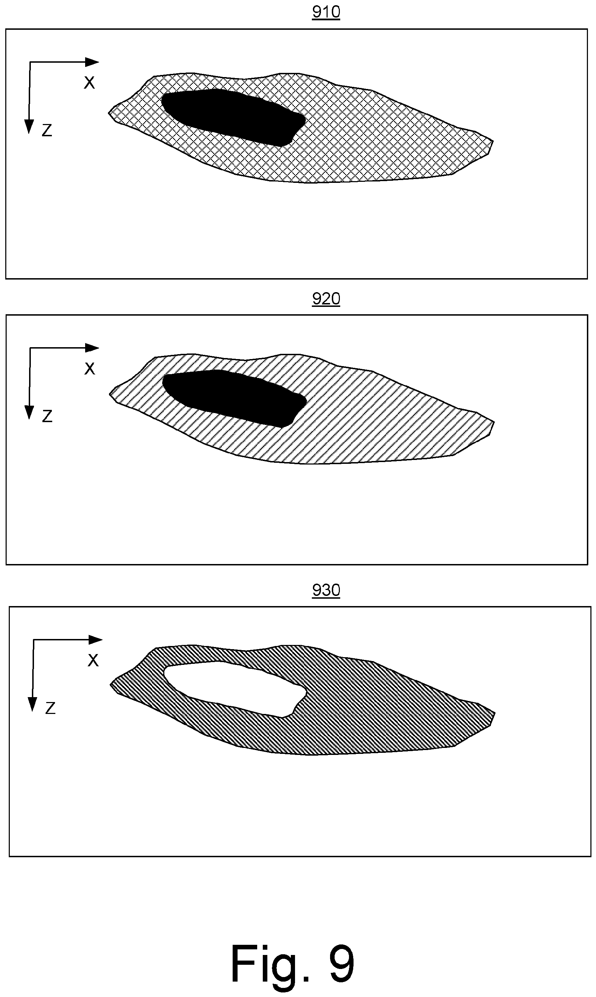

Fig. 9 shows example graphics 910, 920 and 930 as related to a generated gradient mask and an FWI process gradient. Specifically, the graphic 910 represents a generated gradient mask, the graphic 920 represents an FWI gradient without applying the gradient mask, and the graphic 930 represents an FWI gradient applying the gradient mask, where the view is an inline view with respect to depth (e.g., x being an inline direction and z being a depth or time direction). The graphics 910, 920, and 930 are approximate and indicate variations using hatching or shading or fill. The graphics 910, 920, and 930 are described in details herein that may not be distinguishable using these approximated versions; however, the details are exhibited as to actual seismic datasets, which may be proprietary.

As to the graphic 920, specifically the FWI gradient without application of the generated mask of the graphic 910, some high amplitude hotspots may be present in the middle of the gradient where two surveys are overlapping. Note that a framework-implemented workflow generates a gradient mask as represented in the graphic 910 that captures this pattern to thereby provide for gradient balancing of the high amplitude hotspots. As shown in the graphic 930, after applying the gradient mask of the graphic 910, the resulting amplitude is more evenly distributed across the region and from top to bottom (e.g., as represented in an inline and depth plane).

In such an approach, there may remain some regions with stronger amplitude, which may be related to model error rather than illumination effects. For example, in comparison, while applying source illumination boosts the weaker gradient amplitude, the amplitude distribution may not be as uniform and strong amplitudes in the shallower portion of the model may indicate that the applied balancing may have overcompensated. As explained, a framework may provide for one or more assessments, which may, for example, provide a basis for making one or more adjustments (e.g., automatically and/or semi-automatically).

As an example, a framework may provide for automatically generating a gradient balancing mask that may be effective in tackling one or more issues, which may include, an issue as to an ill conditioned gradient due to multi-survey acquisition geometry and survey overlap. As an example, a framework may separate amplitude difference caused by velocity error (e.g., model error) from that caused by illumination due to one or more single and/or multiple survey limitations, acquisition parameter differences, and/or geometric spreading. As explained, application of a gradient balancing mask can speed up convergence of an inversion process and, for example, produce better results with fewer iterations.

As an example, a gradient balancing mask may be implemented using a technique such as, for example, an enhanced template-matching (ETM) technique as to an objective function for a number of iterations of an iterative inversion process. To demonstrate improvements, a comparison may be made by applying the same inversion process with source illumination compensation alone. As an example, an RTM process may be utilized to assess images produced by final models.

As an example, a comparison may include generating graphics of accumulated dv (velocity update) overlaying with an RTM image along with an RTM image by itself. Specifically, comparisons may be made between dv and an RTM image using an inversion result with a gradient balancing mask approach, dv and an RTM image using an inversion result source illumination weight approach, and dv and an RTM image using an inversion result from a production run. In such an example, a total velocity update may be demonstrated to be stronger in the result with the gradient balancing mask approach when comparing to using the source illumination weight approach, particularly in a deeper portion. Various trials demonstrate that dv using a gradient balancing mask approach can be comparable to a production run, which includes full survey data thereby imparting better illumination. In other words, a framework may be demonstrated to improve an inversion process result on the basis of comparing an inversion of a portion of survey data with gradient balancing to an inversion of a larger portion of survey data without gradient balancing as inclusion of more survey data provides greater illumination. Noting that, in such an example, a framework may improve a result of an inversion process for the larger portion of survey data through gradient balancing.

In an example trial, major reflector events demonstrated less jittering and were flatter in the inversion process result implemented with a gradient balancing mask approach. Further, weak reflectors in between were also more focused. In this example trial, convergence was improved responsive to utilizing of the gradient balancing mask approach. For example, the overall data misfit after 10 iterations reduced to 85.64 percent using the gradient balancing mask approach; whereas, the data misfit was only reduced to 92.74 percent when the source illumination weight approach was utilized.

As explained, a framework can operate on field data to automatically generate a gradient balancing mask that can effectively address one or more types of issues that may arise in an inversion process. As explained, such a framework can tackle an ill-conditioned gradient issue as may be due to multi-survey acquisition geometry and/or survey overlapping. As explained, a framework may separate amplitude differences caused by velocity error (e.g., model error) from that caused by illumination due to one or more of survey limitation, acquisition parameter difference and geometric spreading. As demonstrated, a framework can provide for generating and applying a gradient balancing mask in a manner that can speed up convergence of an iterative inversion process and produce better results with fewer iterations.

As an example, a framework may include accessing various types of data from one or more files. For example, consider accessing information as to acquisition geometry or acquisition geometries in a file such as, for example, an SEGY file, which may include one or more headers and/or other metadata. As explained, an SEGY file may include various indicators as to source and/or receiver positions. As an example, such information may be utilized to determine an acquisition geometry or acquisition geometries. As an example, a pattern-based approach may be utilized where a pattern may be formed using file information where an analysis of the pattern may be implemented to determine an acquisition geometry or acquisition geometries (e.g., consider automated acquisition type analysis). As an example, a framework may be automatically configured based on determination of acquisition geometry or acquisition geometries and/or type or types of seismic surveys.

As explained, in 4D seismic, data may be acquired for a region at two particular points in time (e.g., before production of a resource from a reservoir and after some amount of production of the resource from the reservoir). In such an example, the types of surveys may differ, with respect to type and/or acquisition geometry. As an example, a framework may provide for handling a 4D seismic project where, for example, data from multiple points in time may be processed together (e.g., using FWI, etc.).

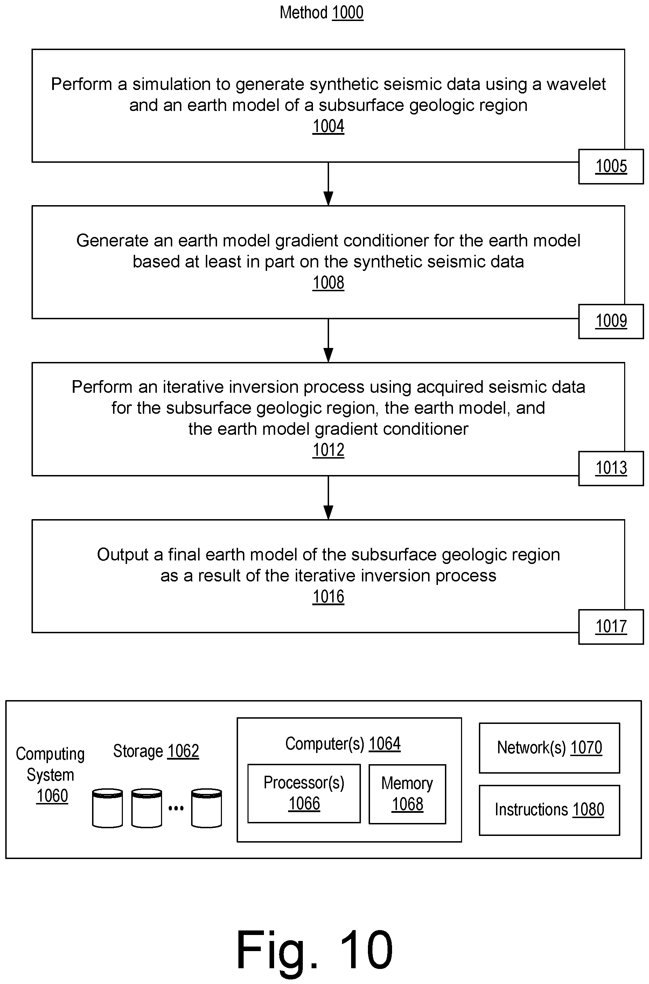

Fig. 10 shows an example of a method 1000 and an example of a computing system 1060. As shown, the method 1000 may include a performance block 1004 for performing a simulation to generate synthetic seismic data using a wavelet and an earth model of a subsurface geologic region, where the earth model includes representations of subsurface structural features and associated geophysical parameters; a generation block 1008 for generating an earth model gradient conditioner for the earth model based at least in part on the synthetic seismic data; a performance block 1012 for performing an iterative inversion process using acquired seismic data for the subsurface geologic region, the earth model, and the earth model gradient conditioner; and an output block 1016 for outputting a final earth model of the subsurface geologic region as a result of the iterative inversion process.

The method 1000 is shown in Fig. 10 in association with various computer-readable media (CRM) blocks 1005, 1009, 1013 and 1017. Such blocks generally include instructions suitable for execution by one or more processors (or cores) to instruct a computing device or system to perform one or more actions. While various blocks are shown, a single medium may be configured with instructions to allow for, at least in part, performance of various actions of the method 1000 (e.g., using the computing system 1060, etc.). A computer-readable medium (CRM) may be a computer-readable storage medium that is not a carrier wave, that is not a signal and that is non-transitory.

Fig. 10 shows the computing system 1060 as including one or more information storage devices 1062, one or more computers 1064, one or more network interfaces 1070 and instructions 1080. As to the one or more computers 1064, each computer may include one or more processors (or processing cores) 1066 and memory 1068 for storing instructions executable by at least one of the one or more processors. A computer may include one or more network interfaces (wired or wireless), one or more graphics cards, a display interface (wired or wireless), etc. A system may include one or more display devices (optionally as part of a computing device, etc.). Memory can be a computer-readable storage medium. A computer-readable storage medium includes, but is not limited to, a carrier wave, a signal, and a non-transitory medium.

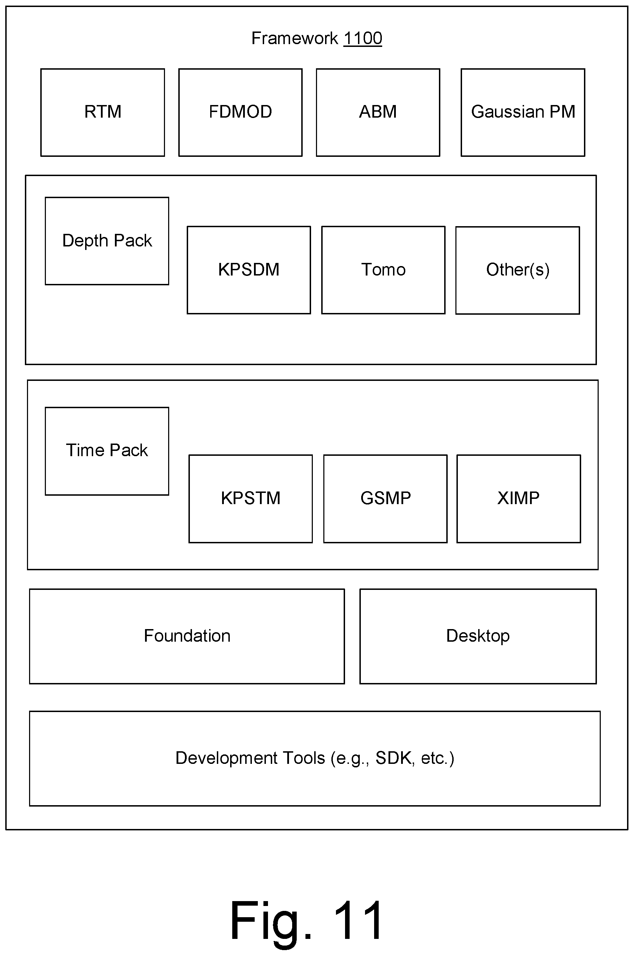

Fig. 11 shows an example of a computational framework 1100 that can include one or more processors and memory, as well as, for example, one or more interfaces. The blocks of the computational framework 1100 may be provided as instructions such as the instructions 1080 of the system 1060 of Fig. 10, etc. The computational framework of Fig. 11 can include one or more features of the OMEGA framework, which includes finite difference modelling (FDMOD) features for two-way wavefield extrapolation modelling, generating synthetic shot gathers with and without multiples. The FDMOD features can generate synthetic shot gathers by using full 3D, two-way wavefield extrapolation modelling, which can utilize wavefield extrapolation logic matches that are used by reverse-time migration (RTM). A model may be specified on a dense 3D grid as velocity and optionally as one or more of anisotropy, dip, and variable density. As explained, an earth model may include one or more parameters that may be specified spatially for a subsurface geologic region.

As shown in Fig. 11, the computational framework 1100 includes features for RTM, FDMOD, adaptive beam migration (ABM), Gaussian packet migration (Gaussian PM), depth processing (e.g., Kirchhoff prestack depth migration (KPSDM), tomography (Tomo)), time processing (e.g., Kirchhoff prestack time migration (KPSTM), general surface multiple prediction (GSMP), extended interbed multiple prediction (XIMP)), framework foundation features, desktop features (e.g., GUIs, etc.), and development tools.

The framework 1100 can include features for geophysics data processing. The framework 1100 can allow for processing various types of data such as, for example, one or more of: land, marine, and transition zone data; time and depth data; 2D, 3D, and 4D surveys; isotropic and anisotropic (TTI and VTI) velocity fields; and multicomponent data.

The framework 1100 can allow for transforming seismic, electromagnetic, microseismic, and/or vertical seismic profile (VSP) data into actionable information, for example, to perform one or more actions in the field for purposes of resource production, etc. The framework 1100 can extend workflows into reservoir characterization and earth modelling. For example, the framework 1100 can extend geophysics data processing into reservoir modelling by integrating with the PETREL framework via the Earth Model Building (EMB) tools, which enable a variety of depth imaging workflows, including model building, editing and updating, depth-tomography QC, residual moveout analysis, and volumetric common-image-point (CIP) pick QC. Such functionalities, in conjunction with depth tomography and migration algorithms of the framework 1100 can produce accurate and precise images of the subsurface. The framework 1100 may provide support for field to final imaging, to prestack seismic interpretation and quantitative interpretation, from exploration to development.

As an example, the FDMOD component can be instantiated via one or more CPUs and/or one or more GPUs for one or more purposes. For example, consider utilizing the FDMOD for generating synthetic shot gathers by using full 3D, two-way wavefield extrapolation modelling, the same wavefield extrapolation logic matches that are used by RTM. FDMOD can model various aspects and effects of wave propagation. The output from FDMOD can be or include synthetic shot gathers including direct arrivals, primaries, surface multiples, and interbed multiples. The model can be specified on a dense 3D grid as velocity and optionally as anisotropy, dip, and variable density. As an example, survey designs can be modelled to ensure quality of a seismic survey, which may account for structural complexity of the model. Such an approach can enable evaluation of how well a target zone will be illuminated. Such an approach may be part of a quality control process (e.g., task) as part of a seismic workflow. As an example, a FDMOD approach may be specified as to size, which may be model size (e.g., a grid cell model size). Such a parameter can be utilized in determining resources to be allocated to perform a FDMOD related processing task. For example, a relationship between model size and CPUs, GPUs, etc., may be established for purposes of generating results in a desired amount of time, which may be part of a plan (e.g., a schedule) for a seismic interpretation workflow.

As an example, as survey data become available, interpretation tasks may be performed for building, adjusting, etc., one or more models of a geologic environment. For example, consider a vessel that transmits a portion of acquired data while at sea and that transmits a portion of acquired data while in port, which may include physically offloading one or more storage devices and transporting such one or more storage devices to an onshore site that includes equipment operatively coupled to one or more networks (e.g., cable, etc.). As data are available, options exist for tasks to be performed.

As an example, the framework 1100 can include one or more sets of instructions executable to perform one or more methods (e.g., consider the modeling 510 and/or the inversion 530 of Fig. 5, the method 600 of Fig. 6, the workflow 700 of Fig. 7, the method 1000 of Fig. 10, etc.).

As an example, a method can include performing a simulation to generate synthetic seismic data using a wavelet and an earth model of a subsurface geologic region, where the earth model includes representations of subsurface structural features and associated geophysical parameters; generating an earth model gradient conditioner for the earth model based at least in part on the synthetic seismic data; performing an iterative inversion process using acquired seismic data for the subsurface geologic region, the earth model, and the earth model gradient conditioner; and outputting a final earth model of the subsurface geologic region as a result of the iterative inversion process. In such an example, generating the earth model gradient conditioner can generate the earth model gradient conditioner for a single seismic survey of the subsurface geologic region, where the acquired seismic data are acquired from the single seismic survey.

As an example, a method can include generating an earth model gradient conditioner that generates the earth model gradient conditioner for multiple, different seismic surveys of a subsurface geologic region, where acquired seismic data are acquired from the multiple, different seismic surveys. In such an example, generating can include computing an earth model gradient for each of the multiple, different seismic surveys. In such an example, generating can include computing a normalization metric value for each of the multiple, different seismic surveys. In such an example, generating can include scaling each of the earth model gradients using the normalization metric values, combining the scaled earth model gradients, and smoothing the combined, scaled earth model gradients. In such an example, smoothing can include applying Gaussian-based smoothing. As an example, generating can include normalizing smoothed, combined, scaled earth model gradients to generate a single normalized earth model gradient. In such an example, generating can include inverting the single normalized earth model gradient to generate an earth model gradient mask as an earth model gradient conditioner.

As an example, an earth model gradient conditioner may be or include an earth model gradient mask. As an example, an earth model gradient conditioner may reduce spatial earth model gradient imbalance. In such an example, a reduction in spatial earth model gradient imbalance may decrease a number of iterations of an iterative inversion process required to converge to a result.

As an example, generating can include distinguishing one or more illumination effects from one or more model error effects. In such an example, the one or more illumination effects may correspond to acquisition geometry of one or more seismic surveys performed to acquire seismic data.

As an example, generating can include accounting for overlapping illumination in one or more portions of a subsurface geologic region from multiple, different seismic surveys, where acquired seismic data are from the multiple, different seismic surveys. In such an example, an earth model gradient conditioner may be applied to reduce an illumination hotspot in at least one of the one or more portions and/or an earth model gradient conditioner may be applied to boost an illumination coldspot in at least one portion of a subsurface geologic region.

As an example, a method may include performing an inversion to determine a wavelet. As an example, a method may include wavelet scaling.

As an example, a system can include a processor; memory operatively coupled to the processor; and processor-executable instructions stored in the memory to instruct the system to: perform a simulation to generate synthetic seismic data using a wavelet and an earth model of a subsurface geologic region, where the earth model includes representations of subsurface structural features and associated geophysical parameters; generate an earth model gradient conditioner for the earth model based at least in part on the synthetic seismic data; perform an iterative inversion process using acquired seismic data for the subsurface geologic region, the earth model, and the earth model gradient conditioner; and output a final earth model of the subsurface geologic region as a result of the iterative inversion process.

As an example, one or more computer-readable storage media can include computer-executable instructions executable to instruct a computing system to: perform a simulation to generate synthetic seismic data using a wavelet and an earth model of a subsurface geologic region, where the earth model includes representations of subsurface structural features and associated geophysical parameters; generate an earth model gradient conditioner for the earth model based at least in part on the synthetic seismic data; perform an iterative inversion process using acquired seismic data for the subsurface geologic region, the earth model, and the earth model gradient conditioner; and output a final earth model of the subsurface geologic region as a result of the iterative inversion process.

As an example, a computer program product can include computer-executable instructions to instruct a computing system to perform a method, for example, consider a method such as, for example, the workflow 700 of Fig. 7, the method 1000 of Fig. 10, etc.

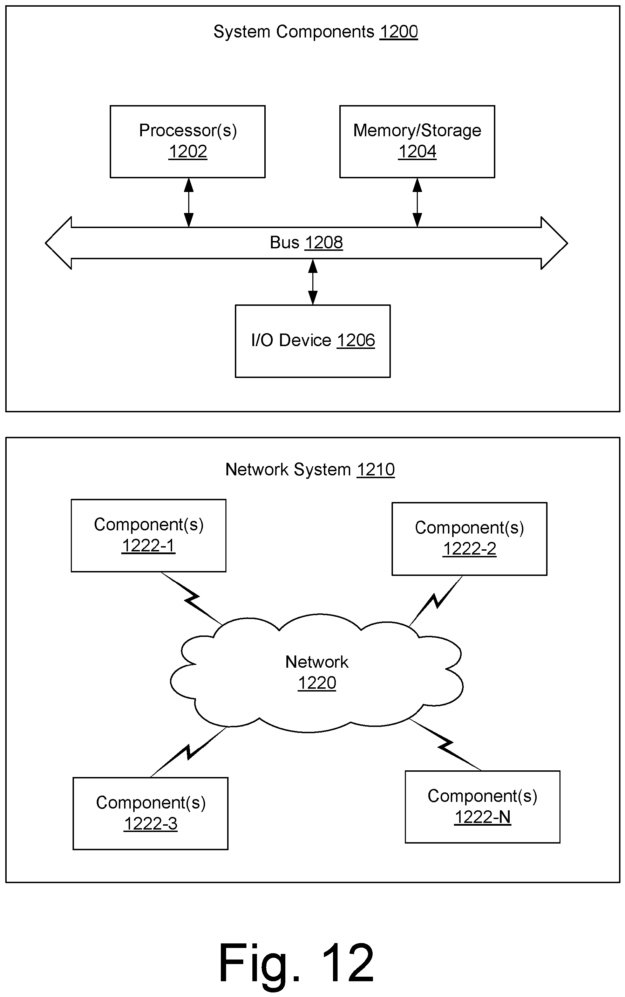

Fig. 12 shows components of a computing system 1200 and a networked system 1210 that includes a network 1220. The system 1200 includes one or more processors 1202, memory and/or storage components 1204, one or more input and/or output devices 1206 and a bus 1208. Instructions may be stored in one or more computer-readable media (memory/storage components 1204). Such instructions may be read by one or more processors (see the processor(s) 1202) via a communication bus (see the bus 1208), which may be wired or wireless. The one or more processors may execute such instructions to implement (wholly or in part) one or more attributes (as part of a method). A user may view output from and interact with a process via an I/O device (see the device 1206). A computer-readable medium may be a storage component such as a physical memory storage device such as a chip, a chip on a package, a memory card, etc. (a computer-readable storage medium).

Components may be distributed, such as in the network system 1210. The network system 1210 includes components 1222-1, 1222-2, 1222-3, . . . 1222-N. The components 1222-1 may include the processor(s) 1202 while the component(s) 1222-3 may include memory accessible by the processor(s) 1202. Further, the component(s) 1222-2 may include an I/O device for display and optionally interaction with a method. The network may be or include the Internet, an intranet, a cellular network, a satellite network, etc.

A device may be a mobile device that includes one or more network interfaces for communication of information. A mobile device may include a wireless network interface (operable via IEEE 802.11, ETSI GSM, BLUETOOTH®, satellite, etc.). A mobile device may include components such as a main processor, memory, a display, display graphics circuitry (optionally including touch and gesture circuitry), a SIM slot, audio/video circuitry, motion processing circuitry (accelerometer, gyroscope), wireless LAN circuitry, smart card circuitry, transmitter circuitry, GPS circuitry, and a battery. A mobile device may be configured as a cell phone, a tablet, etc. A method may be implemented (wholly or in part) using a mobile device. A system may include one or more mobile devices.

A system may be a distributed environment such as a so-called "cloud" environment where various devices, components, etc. interact for purposes of data storage, communications, computing, etc. A device or a system may include one or more components for communication of information via one or more of the Internet (where communication occurs via one or more Internet protocols), a cellular network, a satellite network, etc. A method may be implemented in a distributed environment (wholly or in part as a cloud-based service).

Information may be input from a display (consider a touchscreen), output to a display or both. Information may be output to a projector, a laser device, a printer, etc. such that the information may be viewed. Information may be output stereographically or holographically. As to a printer, consider a 2D or a 3D printer. A 3D printer may include one or more substances that can be output to construct a 3D object. Data may be provided to a 3D printer to construct a 3D representation of a subterranean formation. Layers may be constructed in 3D (horizons, etc.), geobodies constructed in 3D, etc. Holes, fractures, etc., may be constructed in 3D (as positive structures, as negative structures, etc.).

Although only a few example embodiments have been described in detail above, those skilled in the art will readily appreciate that many modifications are possible in the example embodiments. Accordingly, all such modifications are intended to be included within the scope of this disclosure as defined in the following claims. In the claims, means-plusfunction clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures.

Bibliography (documents incorporated by reference herein)

Claerbout, J., and D. Nichols, 1994, Spectral preconditioning: Stanford Exploration Project, Technical Report 82. Ahmed I., 2018, Diving wave illumination using RTM to analyze acquisition geometries for FWI: 88th Annual International Meeting, SEG, Expanded Abstracts, 1299-1303.

**Claims**

1. A method (1000) comprising:

   performing a simulation to generate synthetic seismic data using a wavelet and an earth model of a subsurface geologic region, wherein the earth model comprises representations of subsurface structural features and associated geophysical parameters (1004);
   generating an earth model gradient conditioner for the earth model based at least in part on the synthetic seismic data (1008);
   performing an iterative inversion process using acquired seismic data for the subsurface geologic region, the earth model, and the earth model gradient conditioner (1012); and
   outputting a final earth model of the subsurface geologic region as a result of the iterative inversion process (1016).

2. The method of claim 1, wherein the generating the earth model gradient conditioner generates the earth model gradient conditioner for a single seismic survey of the subsurface geologic region, wherein the acquired seismic data are acquired from the single seismic survey.

3. The method of claims 1 or 2, wherein the generating the earth model gradient conditioner generates the earth model gradient conditioner for multiple, different seismic surveys of the subsurface geologic region, wherein the acquired seismic data are acquired from the multiple, different seismic surveys, optionally wherein the generating comprises computing an earth model gradient for each of the multiple, different seismic surveys, and optionally wherein the generating comprises computing a normalization metric value for each of the multiple, different seismic surveys.

4. The method of any preceding claim, wherein the generating comprises scaling each of the earth model gradients using the normalization metric values, combining the scaled earth model gradients, and smoothing the combined, scaled earth model gradients, optionally wherein the smoothing comprises applying Gaussian-based smoothing and/or optionally wherein the generating comprises normalizing the smoothed, combined, scaled earth model gradients to generate a single normalized earth model gradient.

5. The method of any preceding claim, wherein the generating comprises inverting the single normalized earth model gradient to generate an earth model gradient mask as the earth model gradient conditioner.

6. The method of any preceding claim, wherein the earth model gradient conditioner comprises an earth model gradient mask.

7. The method of any preceding claim, wherein the earth model gradient conditioner reduces spatial earth model gradient imbalance.

8. The method of any preceding claim, wherein a reduction in spatial earth model gradient imbalance decreases a number of iterations of the iterative inversion process required to converge to the result.

9. The method of any preceding claim, wherein the generating comprises distinguishing one or more illumination effects from one or more model error effects, optionally wherein the one or more illumination effects correspond to acquisition geometry of one or more seismic surveys performed to acquire the seismic data.

10. The method of any preceding claim, wherein the generating comprises accounting for overlapping illumination in one or more portions of the subsurface geologic region from multiple, different seismic surveys, wherein the acquired seismic data are from the multiple, different seismic surveys.

11. The method of any preceding claim, wherein the earth model gradient conditioner reduces an illumination hotspot in at least one of the one or more portions.

12. The method of any preceding claim, wherein the earth model gradient conditioner boosts an illumination coldspot in at least one portion of the subsurface geologic region.

13. The method of any preceding claim, comprising performing an inversion to determine the wavelet.

14. A system (1060) comprising:

> a processor (1066);
> memory (1068) operatively coupled to the processor; and
> processor-executable instructions (1080) stored in the memory to instruct the system to:
>
>> perform a simulation to generate synthetic seismic data using a wavelet and an earth model of a subsurface geologic region, wherein the earth model comprises representations of subsurface structural features and associated geophysical parameters (1005);
>> generate an earth model gradient conditioner for the earth model based at least in part on the synthetic seismic data (1009);
>> perform an iterative inversion process using acquired seismic data for the subsurface geologic region, the earth model, and the earth model gradient conditioner (1013); and
>> output a final earth model of the subsurface geologic region as a result of the iterative inversion process (1017).

15. A computer program product that comprises computer-executable instructions to instruct a computing system to perform a method according to any of claims 1 to 13.

Geologic Environment 100

**Fig. 1**

Fig. 2

Fig. 3

Fig. 4

Forward Modeling 510

Inversion 530

# Fig. 5

Method 600

```
┌─────────────────────────────────────┐
│  Provide Initial Model & Selected Wavelet │
│                 610                  │
└─────────────────────────────────────┘
                 │
                 ▼
┌─────────────────────────────────────┐
│       Generate Synthetic Data       │  ◄─────┐
│                 620                  │        │
└─────────────────────────────────────┘        │
                 │                              │
                 ▼                              │
┌─────────────────────────────────────┐        │
│    Compare Field Data to Synthetic Data │    │
│                 630                  │        │
└─────────────────────────────────────┘        │
                 │                    ┌──────────────────┐
                 ▼                    │   Iterate Until  │
┌─────────────────────────────────────┐ │   Convergence   │
│          Compute Gradient           │ │  Criterion Met  │
│                 640                  │ │      670        │
└─────────────────────────────────────┘ └──────────────────┘
                 │                              ▲
                 ▼                              │
┌─────────────────────────────────────┐        │
│         Perform Line Search         │        │
│                 650                  │        │
└─────────────────────────────────────┘        │
                 │                              │
                 ▼                              │
┌─────────────────────────────────────┐        │
│            Update Model             │────────┘
│                 660                  │
└─────────────────────────────────────┘
```

# Fig. 6

700

| Simulate Synthetic Data w/ Wavelet and Initial Model 710 | ← | Invert Multi-Survey Source Wavelet 702 |

Multi-Survey Blocks

Perturb Initial Model with X percent of Maximum Slowness 720

| Compute Gradient (e.g., velocity of earth model) 730 | ⟷ | Compute Gradient for Each Survey 732 |

| Invert Gradient to Compute Mask 740 | | Compute Amplitude RMS Ratios of Each Gradient 734 | → | Scale Each Wavelet by Gradient RMS Ratio 735 |

| Normalize Combined Gradient 738 | ← | Scale Gradients by RMS Ratio, Combine & Smooth 736 |

| Output Mask 750 | | Iterative Inversion Process 760 | → | Result 770 |

# Fig. 7

800

Survey 1

Survey 2

N

Fig. 8

910

920

930

# Fig. 9

Method 1000

Perform a simulation to generate synthetic seismic data using a wavelet
and an earth model of a subsurface geologic region
1004

1005

Generate an earth model gradient conditioner for the earth model
based at least in part on the synthetic seismic data
1008

1009

Perform an iterative inversion process using acquired seismic data
for the subsurface geologic region, the earth model, and
the earth model gradient conditioner
1012

1013

Output a final earth model of the subsurface geologic region
as a result of the iterative inversion process
1016

1017

Computing
System
1060

Storage 1062

Computer(s) 1064

Processor(s)
1066

Memory
1068

Network(s) 1070

Instructions 1080

# Fig. 10

Framework <u>1100</u>

RTM

FDMOD

ABM

Gaussian PM

Depth Pack

KPSDM

Tomo

Other(s)

Time Pack

KPSTM

GSMP

XIMP

Foundation

Desktop

Development Tools (e.g., SDK, etc.)

# Fig. 11

System Components 1200

Processor(s)
1202

Memory/Storage
1204

Bus 1208

I/O Device 1206

Network System 1210

Component(s)
1222-1

Component(s)
1222-2

Network
1220

Component(s)
1222-3

Component(s)
1222-N

# Fig. 12

Europäisches
Patentamt

European
Patent Office

Office européen
des brevets

# EUROPEAN SEARCH REPORT

**Application Number**

EP 25 16 3902

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/293246 A1 (DICKENS THOMAS A [US] ET AL) 15 October 2015 (2015-10-15) | 1,2, 5-12,14, 15 | INV. G01V1/28 |
| Y | * paragraphs [0002] - [0014], [0033] - [0036]; figures 1-5 * | 3,4 | |
| X | WO 2021/207196 A1 (SAUDI ARABIAN OIL CO [SA]; ARAMCO SERVICES CO [US]) 14 October 2021 (2021-10-14) | 1,5,6, 10-15 | |
| Y | * paragraphs [0004] - [0008], [0027] - [0037]; figure 3A * | 3,4 | |
| Y | J. Virieux ET AL: "An introduction to full waveform inversion" In: "Encyclopedia of Exploration Geophysics", 1 January 2017 (2017-01-01), Society of Exploration Geophysicists, XP055600469, ISBN: 978-1-56080-302-7 pages R1-1, DOI: 10.1190/1.9781560803027.entry6, * page 13 * | 3,4 | |

**TECHNICAL FIELDS SEARCHED (IPC)**

G01V

The present search report has been drawn up for all claims

| Place of search | Date of completion of the search | Examiner |
|---|---|---|
| The Hague | 19 August 2025 | Vollmer, Thorsten |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

2

## ANNEX TO THE EUROPEAN SEARCH REPORT
## ON EUROPEAN PATENT APPLICATION NO.

EP 25 16 3902

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2025

| Patent document cited in search report | Publication date | Patent family member(s) | Publication date |
|---|---|---|---|
| US 2015293246 A1 | 15-10-2015 | NONE | |
| WO 2021207196 A1 | 14-10-2021 | SA 522440831 B1 | 07-12-2023 |
| | | US 2021311215 A1 | 07-10-2021 |
| | | WO 2021207196 A1 | 14-10-2021 |

EPO FORM P0459

For more details about this annex : see Official Journal of the European Patent Office, No. 12/82

**EP 4 621 447 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63565243

**Non-patent literature cited in the description**

- **CLAERBOUT, J.** ; **D. NICHOLS**. Spectral preconditioning: Stanford Exploration Project. *Technical Report*, 1994, vol. 82

- **AHMED I.** Diving wave illumination using RTM to analyze acquisition geometries for FWI: 88th Annual International Meeting. *SEG, Expanded Abstracts*, 2018, 1299-1303